# EUROPEAN PATENT APPLICATION

(11) **EP 4 772 778 A1**
(43) Date of publication of application: **08.07.2026**
(21) Application number: 24858444.3
(22) Date of filing: 22.08.2024
(51) Int. Cl.: F16K 1/38, F16K 1/32, F16K 1/42

(54) **ELECTRONIC EXPANSION VALVE, THERMAL MANAGEMENT SYSTEM, AND VEHICLE**

(30) Priority: 31.08.2023 CN 202311133302
(71) Applicant: BYD Company Limited, Shenzhen, Guangdong 518118 (CN)
(72) Inventor: XU, Min, Shenzhen, Guangdong 518118 (CN); CHEN, Tuping, Shenzhen, Guangdong 518118 (CN); YE, Meijiao, Shenzhen, Guangdong 518118 (CN); WANG, Mengyuan, Shenzhen, Guangdong 518118 (CN); TU, Juan, Shenzhen, Guangdong 518118 (CN)
(74) Representative: Mathys & Squire
(86) International application number: PCT/CN2024/114026
(87) International publication number: WO 2025/044902

(57) **Abstract**

An electronic expansion valve (1), a thermal management system, and a vehicle are provided. The electronic expansion valve (1) includes: a valve seat assembly (10), the valve seat assembly (10) being provided with a valve port (121); a valve needle assembly (20), the valve needle assembly (20) being disposed on the valve seat assembly (10) in a reciprocating manner to open or close the valve port (121); and an anti-rotation assembly, the anti-rotation assembly being disposed between the valve seat assembly (10) and the valve needle assembly (20), and the anti-rotation assembly being configured to limit rotation of a portion of the valve needle assembly (20) that at least cooperates with the valve port (121).

## Description

### CROSS-REFERENCE TO RELATED APPLICATIONS

This application is provided based on Chinese Patent Application No. 2023111333021, filed on August 31, 2023, and claims priority to this Chinese Patent Application, which is incorporated herein by reference in its entirety.

### TECHNICAL FIELD

This application relates to the technical field of electronic expansion valves, and more specifically, to an electronic expansion valve, a thermal management system, and a vehicle.

### BACKGROUND

In the related technologies, when a rotor of an electronic expansion valve drives a valve needle to open or close a valve port, the valve needle moves and rotates, resulting in relatively severe wear between the valve needle and the valve port.

### SUMMARY

This application is intended to resolve at least one of technical problems in the related technologies. Therefore, this application provides an electronic expansion valve. The electronic expansion valve uses an anti-rotation assembly to limit rotation of a valve needle assembly, so as to reduce wear between the valve needle assembly and a valve seat assembly, and has advantages of improving service life of the valve needle assembly and service life of the valve seat assembly, reducing noise generated in the electronic expansion valve, and the like.

This application further provides a thermal management system having the electronic expansion valve, and a vehicle.

An electronic expansion valve according to an embodiment of a first aspect of this application includes: a valve seat assembly, the valve seat assembly being provided with a valve port; a valve needle assembly, the valve needle assembly being disposed on the valve seat assembly in a reciprocating manner to open or close the valve port; and an anti-rotation assembly, the anti-rotation assembly being disposed between the valve seat assembly and the valve needle assembly, and the anti-rotation assembly being configured to limit rotation of a portion of the valve needle assembly that at least cooperates with the valve port.

The electronic expansion valve according to this embodiment of this application uses the anti-rotation assembly to limit rotation of the valve needle assembly, so as to reduce wear between the valve needle assembly and the valve seat assembly, and has advantages of improving service life of the valve needle assembly and service life of the valve seat assembly, reducing noise generated in the electronic expansion valve, and the like.

In addition, the electronic expansion valve according to the foregoing embodiment of this application may further have the following additional technical features.

According to some embodiments of this application, the anti-rotation assembly includes: a guide seat, the guide seat being disposed on the valve seat assembly; and a guide sleeve, the guide sleeve being disposed on the valve needle assembly, and the guide sleeve and the guide seat cooperating in an anti-rotation manner to limit rotation of the portion of the valve needle assembly that at least cooperates with the valve port.

According to some embodiments of this application, the guide sleeve is sleeved on and fastened to the valve needle assembly.

According to some optional embodiments of this application, an outer peripheral wall of the valve needle assembly is provided with a first step surface for supporting the guide sleeve.

According to some specific embodiments of this application, the outer peripheral wall of the valve needle assembly is provided with a guide inclined surface, and the guide inclined surface extends obliquely toward the first step surface to guide mounting of the guide sleeve.

In some embodiments, the guide sleeve is located between the guide inclined surface and the first step surface.

According to some embodiments of this application, the guide seat and the valve seat assembly are an integral member; and/or the guide sleeve and the valve needle assembly are an integral member.

According to some embodiments of this application, an outer peripheral wall of a cross-section of the guide sleeve in a radial direction of the valve needle assembly is formed into a non-circular shape, and the outer peripheral wall of the guide sleeve is adapted to cooperate with the guide seat to limit a rotational degree of freedom of the guide sleeve.

According to some embodiments of this application, a first stop portion is disposed on a side of a cavity of the guide seat that faces away from the valve port, and the first stop portion cooperates with the guide sleeve to limit movement displacement of the guide sleeve.

According to some embodiments of this application, the electronic expansion valve further includes: a conversion member, the conversion member cooperating with the valve needle assembly to convert rotation of the conversion member into reciprocating movement of the valve needle assembly; and a cooperation bearing disposed between the conversion member and the valve seat assembly.

In some embodiments, the valve seat assembly is provided with an accommodation groove, the guide seat is disposed in the accommodation groove, and the guide seat is clamped between a first bottom wall of the accommodation groove and the cooperation bearing.

In some examples, a first chamfer is disposed between the first bottom wall and a first inner peripheral wall of the accommodation groove, and a second chamfer is disposed between a placement end surface of the guide seat and an outer peripheral wall of the guide seat.

Further, the placement end surface is supported on the first bottom wall, and the second chamfer and the first chamfer are spaced apart.

According to some optional embodiments of this application, the valve seat assembly is provided with a first stop member, and the first stop member is in contact with a side of the cooperation bearing that faces away from the valve port to limit axial displacement of the cooperation bearing.

According to some specific embodiments of this application, the valve seat assembly includes a valve body, the valve body is a metal member, and a portion of the metal member is bent inward to define the first stop member.

According to some optional embodiments of this application, the cooperation bearing is provided with an inner ring assembly and an outer ring assembly that are relatively rotatable, the conversion member is provided with a second stop portion and a third stop portion that are spaced apart in an axial direction, the inner ring assembly is disposed between the second stop portion and the third stop portion, the second stop portion is located on a side of the third stop portion that faces the valve port, and the outer ring assembly is disposed on the valve seat assembly.

In some embodiments, an outer peripheral wall of the conversion member is provided with an annular recess, and an end surface of the annular recess that is disposed opposite to the second stop portion defines the third stop portion.

According to some specific embodiments of this application, the conversion member includes a first metal member, and a portion of the first metal member is bent outward to define the second stop portion.

According to some embodiments of this application, the electronic expansion valve further includes a rotor component, the conversion member including a first portion and a second portion that are fixedly connected, and the first portion cooperating with the valve needle assembly to convert rotation of the conversion member into reciprocating movement of the valve needle assembly; and the second portion cooperating with the rotor component to be driven to rotate by the rotor component.

According to some optional embodiments of this application, the second portion is formed as a metal member, and the second portion is welded to the rotor component.

According to some optional embodiments of this application, a cooperation member is disposed in the valve seat assembly, the electronic expansion valve further includes a rotation assembly, the rotation assembly cooperates with the valve needle assembly to convert rotation of the rotation assembly into reciprocating movement of the valve needle assembly, and the rotation assembly cooperates with the cooperation member to radially limit the rotation assembly.

In some embodiments, the rotation assembly is inserted into and is in rotational engagement with the cooperation member.

According to some embodiments of this application, the electronic expansion valve further includes a first elastic member, the first elastic member cooperating with the valve needle assembly and the valve seat assembly to apply an elastic force to the valve needle assembly to cause the valve needle assembly to move toward the valve port.

According to some optional embodiments of this application, the first elastic member is located on a side of the guide seat that faces the valve port.

According to some optional embodiments of this application, the valve needle assembly is provided with a cooperation groove, one end of the first elastic member extends into the cooperation groove, and the cooperation groove limits radial displacement of the first elastic member.

According to some embodiments of this application, the valve seat assembly includes: a valve seat; a flow channel seat, the flow channel seat being provided with at least one inlet; and a valve sleeve, the valve sleeve being fastened between the valve seat and the flow channel seat, the valve sleeve being provided with the valve port, and the valve sleeve and the flow channel seat being in interference fit in a radial direction.

According to some optional embodiments of this application, the flow channel seat is provided with a cooperation protrusion portion, and a portion of an outer peripheral wall of the valve sleeve is in interference fit with the cooperation protrusion portion in the radial direction.

In some embodiments, a sealing ring is further disposed between the valve sleeve and the valve seat.

According to some embodiments of this application, the valve needle assembly includes: a valve stem; a valve needle, the valve needle cooperating with the valve stem to be driven by the valve stem to reciprocate; and a second elastic member, the second elastic member being connected to the valve stem and the valve needle to apply a force to the valve needle to cause the valve needle to move toward the valve port when the valve needle assembly closes the valve port.

In some embodiments, the valve stem is provided with a first stop surface and a second stop surface, and the first stop surface and the second stop surface are spaced apart in a movement direction of the valve stem; and the valve needle is provided with a second stop member, at least a portion of the second stop member being located between the first stop surface and the second stop surface, and the valve needle is movable relative to the valve stem to switch the second stop member between abutting against the first stop surface and the second stop surface.

In some embodiments, the anti-rotation assembly includes a guide seat and a guide sleeve, the guide seat is disposed on the valve seat assembly, the guide sleeve is disposed on the valve needle assembly, and the guide sleeve and the guide seat cooperate in an anti-rotation manner to limit rotation of the portion of the valve needle assembly that at least cooperates with the valve port; and the valve needle is provided with a second stop member, the guide sleeve is disposed on a side of the second stop member that faces away from the valve port, and the guide sleeve is adapted to abut against the second stop member to limit movement displacement of the valve needle.

According to some optional embodiments of this application, a first elastic member is further included, the valve seat is provided with a valve cavity communicating with the valve port, the valve needle assembly reciprocates in the valve cavity, and the first elastic member abuts between the valve needle assembly and an inner wall of the valve cavity to apply an elastic force to the valve needle assembly toward the valve port.

According to some optional embodiments of this application, the anti-rotation assembly is disposed between the valve needle and the valve seat assembly.

According to an embodiment of a second aspect of this application, a thermal management system is provided. The thermal management system includes the electronic expansion valve according to the embodiment of the first aspect of this application.

The thermal management system according to the embodiment of this application, by using the electronic expansion valve according to the embodiment of the first aspect of this application, uses the anti-rotation assembly to limit rotation of the valve needle assembly, so as to reduce wear between the valve needle assembly and the valve seat assembly, and has advantages of improving service life of the valve needle assembly and service life of the valve seat assembly, reducing noise generated in the electronic expansion valve, and the like.

According to an embodiment of a third aspect of this application, a vehicle is provided. The vehicle includes the thermal management system according to the embodiment of the second aspect of this application.

The vehicle according to this embodiment of this application, by using the thermal management system according to the embodiment of the second aspect of this application, uses the anti-rotation assembly to limit rotation of the valve needle assembly, so as to reduce wear between the valve needle assembly and the valve seat assembly, and has advantages of improving service life of the valve needle assembly and service life of the valve seat assembly, reducing noise generated in the electronic expansion valve, and the like.

Some of additional aspects and advantages of this application are provided in the following descriptions, and some of the additional aspects and advantages become clear from the following descriptions or are learned from practice of this application.

### BRIEF DESCRIPTION OF DRAWINGS

The foregoing additional aspects and advantages of this application will be clear and easily understood from the description of the embodiments taken in conjunction with the following drawings, where:

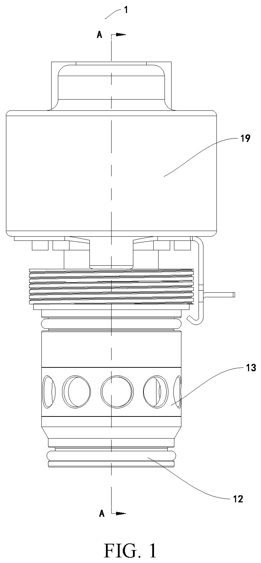

FIG. 1 is a schematic structural diagram of an electronic expansion valve according to an embodiment of this application;
FIG. 2 is a sectional view along A-A in FIG. 1;
FIG. 3 is a schematic structural diagram of a valve seat assembly and a valve needle assembly according to an embodiment of this application;
FIG. 4 is a schematic structural diagram of a valve seat assembly, a valve needle assembly, and a conversion member according to an embodiment of this application;
FIG. 5 is a schematic structural diagram of a valve seat assembly, a valve needle assembly, a conversion member, and a rotor component according to an embodiment of this application;
FIG. 6 is an enlarged view of a portion B in FIG. 5;
FIG. 7 is a schematic structural diagram of a valve seat assembly, a valve needle assembly, a conversion member, a rotor component, and a cooperation member according to an embodiment of this application;

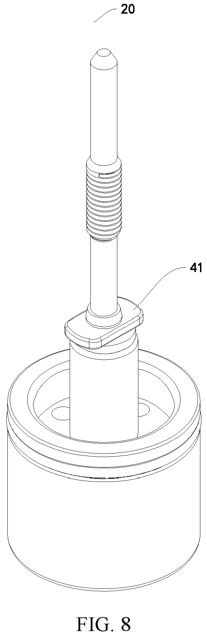

FIG. 8 is a schematic structural diagram of a valve needle assembly according to an embodiment of this application;
FIG. 9 is a sectional view of FIG. 8;
FIG. 10 is a schematic structural diagram of a valve needle assembly and a guide sleeve according to an embodiment of this application;
FIG. 11 is a sectional view of FIG. 10;
FIG. 12 is a schematic diagram of a partial structure of a valve needle assembly according to an embodiment of this application;
FIG. 13 is a schematic structural diagram of a guide sleeve according to an embodiment of this application;
FIG. 14 is a schematic structural diagram of a guide seat according to an embodiment of this application;
FIG. 15 is a sectional view of FIG. 14;

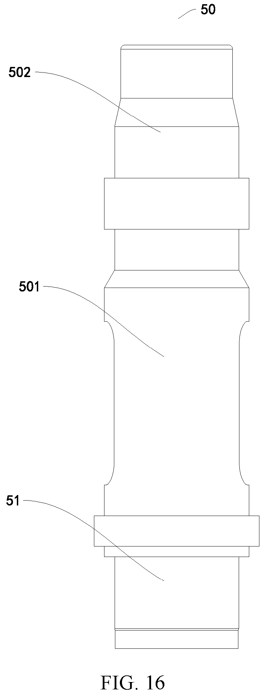

FIG. 16 is a schematic structural diagram of a conversion member according to an embodiment of this application;
FIG. 17 is a sectional view of FIG. 16;
FIG. 18 is a schematic structural diagram of a valve seat according to an embodiment of this application;
FIG. 19 is a sectional view of FIG. 18;
FIG. 20 is a schematic structural diagram of a rotor component according to an embodiment of this application;
FIG. 21 is a sectional view of FIG. 20;
FIG. 22 is a schematic structural diagram of a cooperation member in a direction according to an embodiment of this application;
FIG. 23 is a schematic structural diagram of a cooperation member in another direction according to an embodiment of this application;
FIG. 24 is a schematic structural diagram of a valve seat and a flow channel seat according to an embodiment of this application;
FIG. 25 is a front view of FIG. 24;
FIG. 26 is a sectional view along C-C in FIG. 25;
FIG. 27 is an enlarged view of a portion D in FIG. 26;
FIG. 28 is a schematic structural diagram of a valve seat according to an embodiment of this application;
FIG. 29 is a sectional view of a valve seat according to an embodiment of this application;
FIG. 30 is a schematic structural diagram of a flow channel seat according to an embodiment of this application;
FIG. 31 is a sectional view of a flow channel seat according to an embodiment of this application;
FIG. 32 is a schematic structural diagram of a valve sleeve according to an embodiment of this application;
FIG. 33 is a sectional view of a valve sleeve according to an embodiment of this application; and
FIG. 34 is a schematic structural diagram of a vehicle and a thermal management system according to an embodiment of this application.

Reference numerals: Electronic expansion valve 1,
Valve seat assembly 10, Fluid space 101,
Valve body 11, First stop member 111, Valve cavity 116,
Valve seat 12, Valve port 121, Recess 122, Second protrusion portion 123, First cavity portion 124, Accommodation groove 125, First bottom wall 126, First inner peripheral wall 127, First chamfer 128,
Flow channel seat 13, Inlet 131, Cooperation protrusion portion 132, Second cavity portion 133, Valve sleeve 14, First protrusion portion 141, Step portion 143, Cooperation inclined surface 144, Sealing ring 15,
Cooperation member 16, Cooperation cavity 161, Sleeve 17, First chamber 181, Second chamber 182, Coil assembly 19,
Valve needle assembly 20, Valve stem 21, Guide inclined surface 211, First step surface 212, First cylindrical portion 213, First stop surface 215, Second stop surface 216, Valve needle 22, Cooperation groove 221, Second stop member 222, Balance hole 23, First cooperation surface 231, Second cooperation surface 232, Second elastic member 24,
Guide seat 30, Cavity 31, First stop portion 311, Placement end surface 33, Second chamfer 34, Guide sleeve 41, Cooperation bearing 42, Inner ring assembly 421, Outer ring assembly 422, First elastic member 43,
Conversion member 50, First portion 501, Second portion 502, First metal member 51, Second stop portion 511, Annular recess 512, Third stop portion 515,
Rotor component 60, Connection portion 61, Vehicle 91, Thermal management system 92.

### DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The embodiments described below with reference to the drawings are examples and aim to explain this application and cannot be construed as limiting this application.

In descriptions of this application, it will be understood that the orientation or positional relationship indicated by the terms "center", "longitudinal", "horizontal", "vertical", "width", "thickness", "top", "bottom", "inner", "outer", and the like, is an orientation or positional relationship shown based on the accompanying drawings, and is only for ease of describing this application and simplifying the descriptions, rather than indicating or implying that the apparatus or element indicated must have a specific orientation or be constructed and operated in a specific orientation, and therefore will not be understood as a limitation on this application.

In addition, terms "first" and "second" are merely used for description purposes, and will not be understood as indicating or implying relative importance or implicitly indicating a quantity of technical features indicated. Therefore, a feature defined by "first" or "second" may explicitly or implicitly include one or more such features. In the description of this application, "a plurality of" means at least two, for example, two or three, unless otherwise clearly and specifically defined.

In this application, unless otherwise explicitly specified and defined, terms such as "mount", "interconnect", "connect", and "fix" will be understood in a broad sense, for example, will be understood as a fixed connection, a detachable connection, or an integrated connection, will be understood as a mechanical connection, or an electrical connection or mutual communication, or will be understood as a direct connection or an indirect connection through an intermediate medium, or will be understood as internal communication between two elements or an interaction relationship between two elements. A person of ordinary skill in the art may understand specific meanings of the foregoing terms in this application based on specific situations.

In this application, unless otherwise explicitly specified and defined, that the first feature is "above" or "below" the second feature may include that the first feature is in direct contact with the second feature, or may include that the first feature and the second feature are in contact with each other through another feature therebetween rather than direct contact. In addition, that the first feature is "on", "above", and "over" the second feature includes that the first feature is directly above and obliquely above the second feature, or merely indicates that a horizontal height of the first feature is higher than that of the second feature.

The following describes an electronic expansion valve 1 according to embodiments of this application with reference to the accompanying drawings.

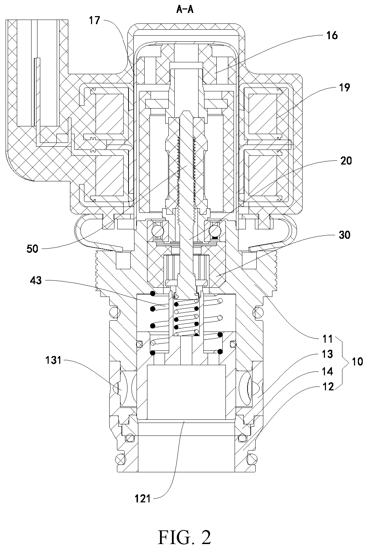

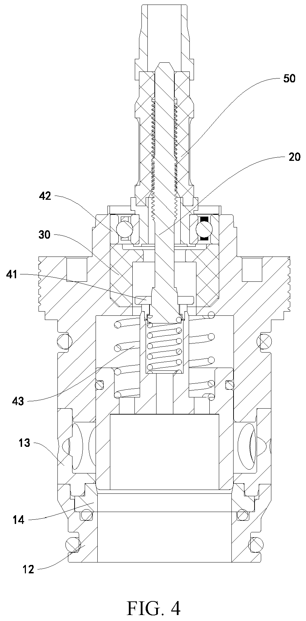

As shown in FIG. 2 and FIG. 4, the electronic expansion valve 1 according to the embodiments of this application includes a valve seat assembly 10, a valve needle assembly 20, and an anti-rotation assembly.

The valve seat assembly 10 is provided with a valve port 121. The valve needle assembly 20 is disposed on the valve seat assembly 10 in a reciprocating manner to open or close the valve port 121. The anti-rotation assembly is disposed between the valve seat assembly 10 and the valve needle assembly 20. The anti-rotation assembly is configured to limit rotation of a portion of the valve needle assembly 20 that at least cooperates with the valve port 121, so as to ensure that when the valve needle assembly 20 opens or closes the valve port 121, the portion of the valve needle assembly 20 that cooperates with the valve port 121 only moves relative to the valve seat assembly 10 without rotating. In this way, wear at the portion of the valve needle assembly 20 that cooperates with the valve port 121 can be reduced, thereby improving service life of the valve needle assembly 20, improving service life of the electronic expansion valve 1, and reducing noise generated in the electronic expansion valve 1.

Specifically, when the valve needle assembly 20 reciprocates in the valve seat assembly 10 to open or close the valve port 121, when the portion of the valve needle assembly 20 that cooperates with the valve port 121 has a tendency to rotate, the anti-rotation assembly can limit rotation of this portion of the valve needle assembly 20, so that the portion of the valve needle assembly 20 that cooperates with the valve port 121 can only reciprocate in the valve seat assembly 10 without rotating. Therefore, when the valve needle assembly 20 reciprocates to open or close the valve port 121, wear on the portion of the valve needle assembly 20 that cooperates with the valve port 121 can be reduced.

Therefore, the electronic expansion valve 1 according to this embodiment of this application uses the anti-rotation assembly to limit rotation of the valve needle assembly 20, so as to reduce wear between the valve needle assembly 20 and the valve seat assembly 10, and has advantages of improving service life of the valve needle assembly 20 and service life of the valve seat assembly 10, reducing noise generated in the electronic expansion valve 1, and the like.

The following describes an electronic expansion valve 1 according to specific embodiments of this application with reference to the accompanying drawings.

As shown in FIG. 2 and FIG. 4, the electronic expansion valve 1 according to the embodiments of this application includes a valve seat assembly 10, a valve needle assembly 20, and an anti-rotation assembly.

In some embodiments of this application, the valve needle assembly 20 includes a valve stem 21 and a valve needle 22. The valve needle 22 cooperates with the valve stem 21 to be driven by the valve stem 21 to reciprocate. The valve needle 22 is configured to open or close the valve port 121.

In some embodiments, the anti-rotation assembly is disposed between the valve seat assembly 10 and the valve stem 21 to limit a rotational degree of freedom of the valve stem 21, so that the valve stem 21 can only reciprocate in the valve seat assembly 10 without rotating. In this way, the valve stem 21 only drives the valve needle 22 to reciprocate without driving the valve needle 22 to rotate. This helps reduce wear between the valve needle 22 and the valve port 121 when the valve needle 22 opens or closes the valve port 121.

In some other embodiments, the anti-rotation assembly is disposed between the valve seat assembly 10 and the valve needle 22. Even if the valve stem 21 rotates, under limitation of the anti-rotation assembly, the valve needle 22 only moves in the valve seat assembly 10 without rotating. This helps reduce wear between the valve needle 22 and the valve port 121 when the valve needle 22 opens or closes the valve port 121.

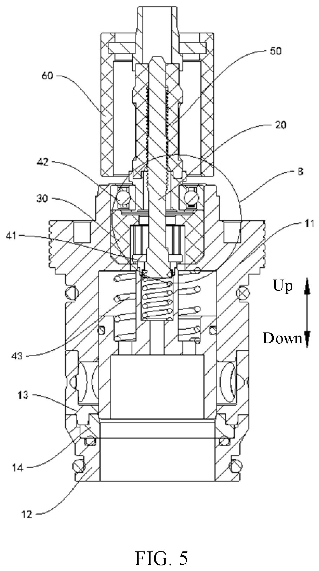

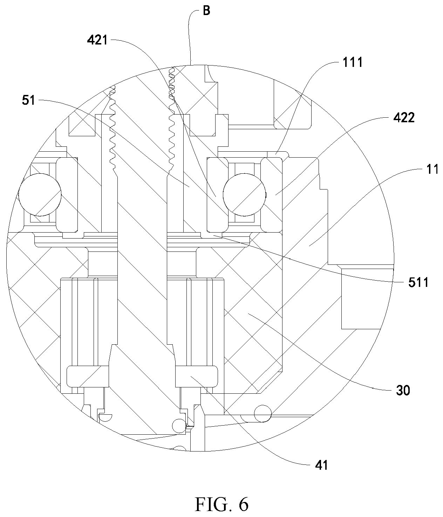

In some embodiments of this application, as shown in FIG. 5 and FIG. 6, the anti-rotation assembly includes a guide seat 30 and a guide sleeve 41. The guide seat 30 is disposed on the valve seat assembly 10. The guide sleeve 41 is disposed on the valve needle assembly 20. The guide sleeve 41 and the guide seat 30 cooperate in an anti-rotation manner to limit rotation of the portion of the valve needle assembly 20 that at least cooperates with the valve port 121. When the valve needle assembly 20 reciprocates, under limitation of the guide seat 30, the guide sleeve 41 and the portion of the valve needle assembly 20 that cooperates with the valve port 121 can only move in the valve seat assembly 10 without rotating. In this way, friction between the portion of the valve needle assembly 20 that cooperates with the valve port 121 and the valve seat assembly 10 can be reduced when the valve needle assembly 20 opens or closes the valve port 121, thereby reducing noise generated in the electronic expansion valve 1, reducing the degree of mutual wear between the valve needle assembly 20 and the valve seat assembly 10, improving service life of the valve needle assembly 20, and improving service life of the electronic expansion valve 1.

Specifically, when the portion of the valve needle assembly 20 that cooperates with the valve port 121 reciprocates in the valve seat assembly 10 to open or close the valve port 121, when the portion of the valve needle assembly 20 that cooperates with the valve port 121 has a tendency to rotate, cooperation of the guide seat 30 and the guide sleeve 41 can limit rotation of the portion of the valve needle assembly 20 that cooperates with the valve port 121, so that the portion of the valve needle assembly 20 that cooperates with the valve port 121 can only reciprocate in the valve seat assembly 10 without rotating. Therefore, when the portion of the valve needle assembly 20 that cooperates with the valve port 121 reciprocates to open or close the valve port 121, wear on the portion of the valve needle assembly 20 that cooperates with the valve port 121 can be reduced.

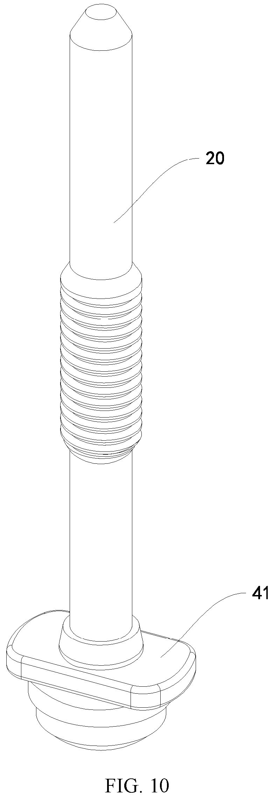

In some other embodiments of this application, as shown in FIG. 4 and FIG. 10, the guide sleeve 41 is sleeved on and fastened to the valve needle assembly 20. The guide sleeve 41 cooperates with the guide seat 30 disposed on the valve seat assembly 10. When the portion of the valve needle assembly 20 that cooperates with the valve port 121 has a tendency to rotate, the guide sleeve 41 also has a tendency to rotate. In this case, the guide seat 30 can limit rotation of the guide sleeve 41, and then limit rotation of the portion of the valve needle assembly 20 that at least cooperates with the valve port 121, so that the portion of the valve needle assembly 20 that at least cooperates with the valve port 121 and the guide sleeve 41 can only reciprocate without rotating.

Disposing the guide sleeve 41 separately, mounting the guide sleeve 41 to the valve needle assembly 20, and limiting rotation of the portion of the valve needle assembly 20 that at least cooperates with the valve port 121 by using cooperation between the guide sleeve 41 and the guide seat 30 are conducive to reducing structural complexity of the valve needle assembly 20 and lowering manufacturing costs of the valve needle assembly 20.

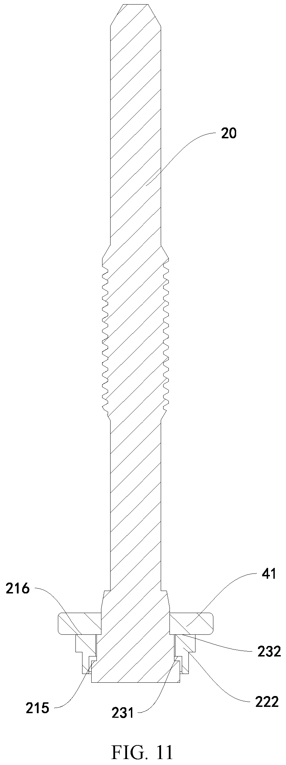

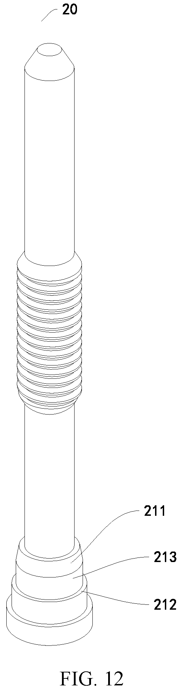

In some optional embodiments of this application, as shown in FIG. 11 and FIG. 12, an outer peripheral wall of the valve needle assembly 20 is provided with a first step surface 212. The first step surface 212 is configured to support the guide sleeve 41 to limit the position of the guide sleeve 41, thereby preventing the guide sleeve 41 from falling off the valve needle assembly 20.

In some specific embodiments of this application, as shown in FIG. 11 and FIG. 12, the outer peripheral wall of the valve needle assembly 20 is provided with a guide inclined surface 211. The guide inclined surface 211 extends obliquely toward the first step surface 212 to guide mounting of the guide sleeve 41, thereby allowing the guide sleeve 41 to be smoothly sleeved on the valve needle assembly 20. In this way, when the valve needle assembly 20 reciprocates, the valve needle assembly 20 can drive the guide sleeve 41 to reciprocate, thereby preventing the valve needle assembly 20 from being disengaged from the guide sleeve 41 when the valve needle assembly 20 reciprocates, and further limiting rotation of the portion of the valve needle assembly 20 that at least cooperates with the valve port 121 by using cooperation between the guide sleeve 41 and the guide seat 30.

In some embodiments, the guide sleeve 41 is located between the guide inclined surface 211 and the first step surface 212 to limit the position of the guide sleeve 41 on the valve needle assembly 20. When the valve needle assembly 20 reciprocates, the valve needle assembly 20 can drive the guide sleeve 41 to reciprocate, thereby preventing the valve needle assembly 20 from being disengaged from the guide sleeve 41 when the valve needle assembly 20 reciprocates, and further limiting rotation of the portion of the valve needle assembly 20 that at least cooperates with the valve port 121 by using cooperation between the guide sleeve 41 and the guide seat 30.

In some embodiments, as shown in FIG. 12, the valve needle assembly 20 has a first cylindrical portion 213, the first cylindrical portion 213 is located between the guide inclined surface 211 and the first step surface 212, the guide sleeve 41 is sleeved on the first cylindrical portion 213, and the guide sleeve 41 is in interference fit with the first cylindrical portion 213. When the guide sleeve 41 is sleeved on the valve needle assembly 20, the guide inclined surface 211 can guide mounting of the guide sleeve 41 to allow the guide sleeve 41 to be smoothly sleeved on the first cylindrical portion 213, so that the guide sleeve 41 smoothly cooperates with the first cylindrical portion 213.

After the guide sleeve 41 is sleeved on the first cylindrical portion 213, one end of the guide sleeve 41 abuts against and cooperates with the first step surface 212 to limit the position of the guide sleeve 41 on the valve needle assembly 20, thereby allowing the guide sleeve 41 to be smoothly sleeved on the valve needle assembly 20.

In some optional embodiments of this application, the guide seat 30 and the valve seat assembly 10 are an integral member. In this way, a mounting step for fastening the guide seat 30 to the valve seat assembly 10 is reduced, and rotation of the portion of the valve needle assembly 20 that at least cooperates with the valve port 121 is limited by using cooperation between the guide seat 30 and the guide sleeve 41.

In some optional embodiments of this application, the guide sleeve 41 and the valve needle assembly 20 are an integral member. In this way, a mounting step for fastening the guide sleeve 41 to the valve needle assembly 20 is reduced, and rotation of the portion of the valve needle assembly 20 that at least cooperates with the valve port 121 is limited by using cooperation between the guide seat 30 and the guide sleeve 41.

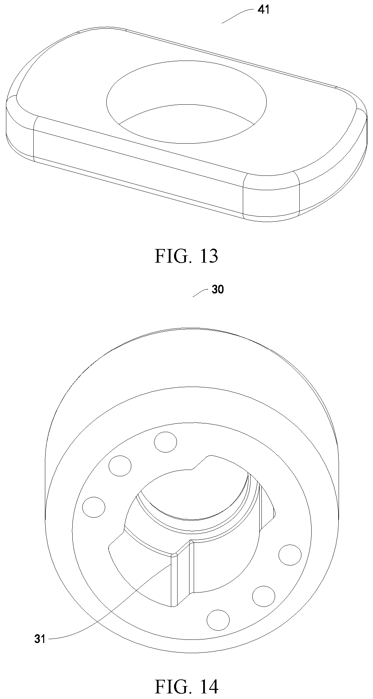

In some embodiments of this application, as shown in FIG. 13 and FIG. 14, an outer peripheral wall of a cross-section of the guide sleeve 41 in a radial direction of the valve needle assembly 20 is formed into a non-circular shape. The outer peripheral wall of the guide sleeve 41 is adapted to cooperate with the guide seat 30 to limit a rotational degree of freedom of the guide sleeve 41, so that when the guide sleeve 41 has a tendency to rotate, the guide seat 30 has an anti-rotation force on the outer peripheral wall of the guide sleeve 41 to limit rotation of the guide sleeve 41, thereby limiting rotation of the valve needle assembly 20, and allowing the valve needle assembly 20 to only reciprocate in the valve seat assembly 10 without rotating. In this way, when the valve needle assembly 20 opens or closes the valve port 121, wear between the valve needle assembly 20 and the valve seat assembly 10 can be reduced.

In some embodiments, the guide seat 30 has a cavity 31, and a cross-sectional area of the cavity 31 is in a non-circular shape adapted to the outer peripheral wall of the guide sleeve 41. When the guide sleeve 41 has a tendency to rotate, an inner wall of the cavity 31 has an anti-rotation force on the outer peripheral wall of the guide sleeve 41 to limit rotation of the guide sleeve 41, thereby allowing the guide sleeve 41 to only reciprocate in the cavity 31 without rotating, and allowing the valve needle assembly 20 to only reciprocate without rotating. In this way, when the valve needle assembly 20 opens or closes the valve port 121, friction between the valve needle assembly 20 and the valve seat assembly 10 can be reduced, thereby reducing wear between the valve needle assembly 20 and the valve seat assembly 10.

In some examples, the inner wall of the cavity 31 is in sliding fit with the outer peripheral wall of the guide sleeve 41. When the valve needle assembly 20 reciprocates, the inner wall of the cavity 31 can guide a movement direction of the guide sleeve 41, thereby allowing the guide sleeve 41 to smoothly reciprocate in the cavity 31, and allowing the valve needle assembly 20 to smoothly open or close the valve port 121.

In some examples, the outer peripheral wall of the guide sleeve 41 may be formed into a triangle, a square, a hexagon, and the like. At least a portion of the inner wall of the cavity 31 in the guide seat 30 is correspondingly formed into a triangle, a square, a hexagon, and the like to cooperate with the guide sleeve 41 in an anti-rotation manner.

In some other examples, the outer peripheral wall of the guide sleeve 41 is provided with one of a guide recess and a guide protrusion, and the inner wall of the cavity 31 is provided with the other of the guide protrusion and the guide recess. The guide protrusion extends into the guide recess and can slide in the guide recess to guide the movement direction of the guide sleeve 41 by using cooperation between the guide protrusion and the guide recess. In addition, when the guide sleeve 41 has a tendency to rotate, rotation of the guide sleeve 41 is limited by using cooperation between the guide protrusion and the guide recess, thereby limiting rotation of the valve needle assembly 20.

For example, the outer peripheral wall of the guide sleeve 41 is provided with a guide recess, and the inner wall of the cavity 31 is provided with a guide protrusion. Both the guide recess and the guide protrusion extend in an up-down direction. When the valve needle assembly 20 moves in the up-down direction, the guide recess slides in the up-down direction, and the guide protrusion slides in the guide recess in the up-down direction to limit the movement direction of the guide sleeve 41 and further limit a movement direction of the valve needle assembly 20. This allows the valve needle assembly 20 to smoothly reciprocate in the up-down direction, so that the valve needle assembly 20 can smoothly open or close the valve port 121.

In addition, when the valve needle assembly 20 has a tendency to rotate, because the guide protrusion extends into the guide recess and the guide seat 30 is fastened to the valve seat assembly 10, a side wall of the guide recess has an anti-rotation force on the guide protrusion to limit rotation of the guide sleeve 41, thereby allowing the guide sleeve 41 and the valve needle assembly 20 to only reciprocate in the up-down without rotating, and further allowing the valve needle assembly 20 to only reciprocate. In this way, when the valve needle assembly 20 opens or closes the valve port 121, friction between the valve needle assembly 20 and the valve seat assembly 10 can be reduced, thereby reducing wear between the valve needle assembly 20 and the valve seat assembly 10, and reducing noise generated in the electronic expansion valve 1.

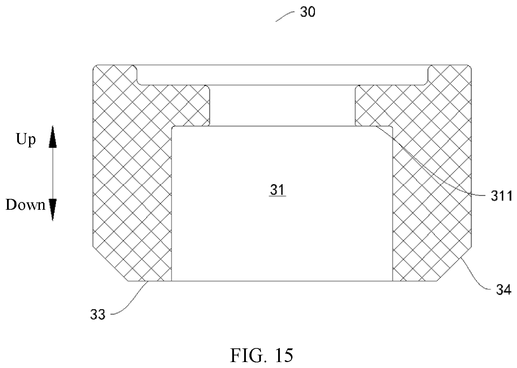

In some embodiments of this application, as shown in FIG. 15, a first stop portion 311 is disposed on a side of the cavity 31 of the guide seat 30 that faces away from the valve port 121. The first stop portion 311 is adapted to cooperate with the guide sleeve 41 to limit movement displacement of the guide sleeve 41. By limiting the range of movement displacement of the guide sleeve 41, a range of movement displacement of the valve needle assembly 20 can be controlled, thereby controlling the degree to which the valve needle assembly 20 fully opens the valve port 121.

Specifically, when the valve needle assembly 20 moves toward a direction facing away from the valve port 121 to open the valve port 121, the valve needle assembly 20 no longer continues to move when the guide sleeve 41 cooperates with the first stop portion 311. In this case, the valve needle assembly 20 fully opens the valve port 121.

In addition, because the guide seat 30 is fastened in the valve seat assembly 10, the guide seat 30 is fixed. The guide seat 30 cooperates with the guide sleeve 41 to limit the rotational degree of freedom of the guide sleeve 41, so that the guide sleeve 41 can only move in the cavity 31 without rotating. In this way, when the valve needle assembly 20 moves to open the valve port 121, only relative movement occurs between the first stop portion 311 and the guide sleeve 41, and no relative rotation occurs. Therefore, when the first stop portion 311 cooperates with the guide sleeve 41, friction between the first stop portion 311 and the guide sleeve 41 is relatively small, and no rotational friction is generated, thereby reducing noise in the electronic expansion valve 1.

In some embodiments, as shown in FIG. 14, the guide seat 30 is provided with a plurality of manufacturing holes 39 to assist in performing injection molding on the guide seat 30. Specifically, the guide seat 30 defines the cavity 31, and the cavity 31 extends in the up-down direction. In a radial direction of the cavity 31, a wall thickness of the guide seat 30 is relatively large. The manufacturing holes 39 extend in the up-down direction to reduce the wall thickness of the cavity 30, thereby reducing the possibility of deformation in a peripheral wall of the guide seat 30 when injection molding is performed on the guide seat 30.

In some embodiments of this application, as shown in FIG. 4, the electronic expansion valve 1 further includes a conversion member 50 and a cooperation bearing 42. The conversion member 50 cooperates with the valve needle assembly 20 to convert rotation of the conversion member 50 into reciprocating movement of the valve needle assembly 20. The cooperation bearing 42 is disposed between the conversion member 50 and the valve seat assembly 10. The cooperation bearing 42 supports rotation of the conversion member 50, so that the conversion member 50 can smoothly rotate. This allows the conversion member 50 to smoothly drive the valve needle assembly 20 to reciprocate, thereby allowing the valve needle assembly 20 to smoothly open or close the valve port 121.

In some embodiments, as shown in FIG. 4, the conversion member 50 is in threaded fit with the valve needle assembly 20. Because the guide sleeve 41 cooperates with the guide seat 30, the guide seat 30 can limit rotation of the guide sleeve 41, thereby limiting rotation of the portion of the valve needle assembly 20 that at least cooperates with the valve port 121. In this way, when the conversion member 50 rotates, the conversion member 50 can drive the portion of the valve needle assembly 20 that cooperates with the valve port 121 to reciprocate without driving the valve needle assembly 20 to rotate, so that the portion of the valve needle assembly 20 that cooperates with the valve port 121 can smoothly open or close the valve port 121.

In some embodiments, the cooperation bearing 42 includes an inner ring assembly 421 and an outer ring assembly 422. The outer ring assembly 422 is fastened to the valve seat assembly 10. The inner ring assembly 421 is fastened to the conversion member 50. When the conversion member 50 rotates, the conversion member 50 can drive the inner ring assembly 421 to rotate, so that the conversion member 50 can rotate relative to the valve seat assembly 10, thereby allowing the conversion member 50 to smoothly drive the valve needle assembly 20 to reciprocate.

In some optional embodiments of this application, the valve seat assembly 10 is provided with an accommodation groove 125. The guide seat 30 is disposed in the accommodation groove 125, and the guide seat 30 is clamped between a first bottom wall 126 of the accommodation groove 125 and the cooperation bearing 42. In this way, after the cooperation bearing 42 is fastened to the valve seat assembly 10, the cooperation bearing 42 applies a force to the guide seat 30 toward the bottom wall of the accommodation groove 125, thereby limiting the position of the guide seat 30 to fasten the guide seat 30 in the accommodation groove 125. This allows the guide seat 30 to limit the rotational degree of freedom of the guide sleeve 41, and further limit a rotational degree of freedom of the portion of the valve needle assembly 20 that at least cooperates with the valve port 121.

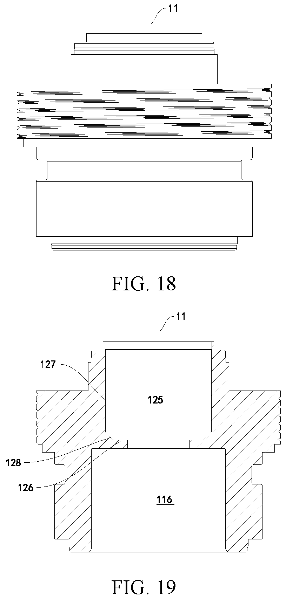

In some specific embodiments of this application, as shown in FIG. 15 and FIG. 19, a first chamfer 128 is disposed between the first bottom wall 126 and a first inner peripheral wall 127 of the accommodation groove 125. A second chamfer 34 is disposed between a placement end surface 33 and an outer peripheral wall of the guide seat 30. Disposing the first chamfer 128 between the first bottom wall 126 and the first inner peripheral wall 127 of the accommodation groove 125 is conducive to increasing a wall thickness of a portion of the valve seat assembly 10 that corresponds to the first chamfer 128, thereby enhancing structural strength of the valve seat assembly 10. The second chamfer 34 is disposed on the guide seat 30, so that when the guide seat 30 is placed in the accommodation groove 125, the first chamfer 128 can avoid the second chamfer 34, thereby avoiding mutual interference between the first chamfer 128 and the second chamfer 34.

In some embodiments, the placement end surface 33 is supported on the first bottom wall 126, and the second chamfer 34 and the first chamfer 128 are spaced apart, so that the guide seat 30 can be smoothly disposed in the accommodation groove 125. The placement end surface 33 of the guide seat 30 is enabled to be attached to the first bottom wall 126, so that the guide seat 30 can be stably placed in the accommodation groove 125, thereby allowing the guide seat 30 to limit the rotational degree of freedom of the portion of the valve needle assembly 20 that at least cooperates with the valve port 121.

In some examples, as shown in FIG. 15 and FIG. 19, both the first chamfer 128 and the second chamfer 34 are beveled chamfers, and the first chamfer 128 and the second chamfer 34 are 45° chamfers. A right-angle side of the second chamfer 34 is greater than that of the first chamfer 128, so that when the guide seat 30 is placed in the accommodation groove 122, the first chamfer 128 and the second chamfer 34 can be spaced apart, thereby allowing the first chamfer 128 to avoid the second chamfer 34 and avoiding mutual interference between the first chamfer 128 and the second chamfer 34. Further, the guide seat 30 can be stably disposed in the accommodation groove 122, so that the guide seat 30 can limit the rotational degree of freedom of the valve needle assembly 20. It will be understood that, the first chamfer 128 and the second chamfer 34 may also be fillets or other forms.

In some optional embodiments of this application, the valve seat assembly 10 is provided with a first stop member 111. The first stop member 111 is in contact with a side of the cooperation bearing 42 that faces away from the valve port 121 to limit axial displacement of the cooperation bearing 42, and further limit the position of the cooperation bearing 42, so that the cooperation bearing 42 can support the position of the conversion member 50. This allows the conversion member 50 to smoothly rotate and drive the valve needle assembly 20 to smoothly move when the conversion member 50 rotates, so that the valve needle assembly 20 can open or close the valve port 121.

In some specific embodiments of this application, as shown in FIG. 5 and FIG. 6, the valve seat assembly 10 includes a valve body 11. The valve body 11 is a metal member. A portion of the metal member is bent inward to define a first stop member 111. In this way, the cooperation bearing 42 can be conveniently mounted to the valve body 11. Specifically, after the cooperation bearing 42 is mounted to the valve body 11, a portion of the metal member is bent so that the first stop member 111 is in contact with and cooperates with the side of the cooperation bearing 42 that faces away from the valve port 121.

In some embodiments, a portion of the metal member is bent inward to define a plurality of first stop members 111. In this way, the cooperation area between the metal member and the cooperation bearing 42 is increased, and the plurality of first stop members 111 are used to more reliably limit axial displacement of the cooperation bearing 42.

In some embodiments, as shown in FIG. 6 and FIG. 19, the valve body 11 defines the accommodation groove 125. The first stop member 111 abuts against and cooperates with an upper end of the outer ring assembly 422 of the cooperation bearing 42. The cooperation bearing 42 is sleeved on the conversion member 50. The inner ring assembly 421 of the cooperation bearing 42 is fastened to and cooperates with the conversion member 50. After the cooperation bearing 42 is fastened to the conversion member 50, the cooperation bearing 42 is first mounted to the accommodation groove 125, then, a portion of the metal member is bent so that the first stop member 111 is in contact with and cooperates with the upper end of the outer ring assembly 422 of the cooperation bearing 42 to limit the position of the cooperation bearing 42 on the valve body 11. In addition, upward movement of the cooperation bearing 42 can be limited, thereby limiting the position of the cooperation bearing 42 in the accommodation groove 125 in the up-down direction (the up-down direction is shown in FIG. 5, and it will be understood herein that, for ease of description of the accompanying drawings, the foregoing direction is limited only, and does not limit an actual setting position and a direction of the valve seat assembly 10 of the electronic expansion valve 1).

In some other specific embodiments of this application, the first stop member 111 is fixedly disposed on the valve seat assembly 10. After the position of the cooperation bearing 42 on the valve seat assembly 10 is determined, the first stop member 111 is mounted and fastened to the valve seat assembly 10, so that the first stop member 111 is in contact with and cooperates with the side of the cooperation bearing 42 that faces away from the valve port 121, and the first stop member 111 is used to limit axial displacement of the cooperation bearing 42.

The first stop member 111 may be a stop plate. The stop plate is fastened to a side wall of the accommodation groove 125. The stop plate is located above the cooperation bearing 42 and abuts against and cooperates with the upper end of the outer ring assembly 422 of the cooperation bearing 42, thereby limiting movement of the cooperation bearing 42 in the up-down direction.

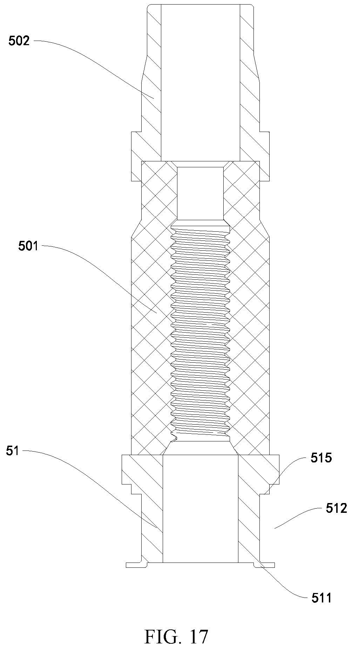

In some optional embodiments of this application, as shown in FIG. 6 and FIG. 17, the cooperation bearing 42 is provided with the inner ring assembly 421 and the outer ring assembly 422 that are relatively rotatable. The conversion member 50 is provided with a second stop portion 511 and a third stop portion 515. The second stop portion 511 and the third stop portion 515 are spaced apart in an axial direction of the conversion member 50. The second stop portion 511 is located on a side of the third stop portion 515 that faces the valve port 121. The inner ring assembly 421 is clamped between the third stop portion 515 and the second stop portion 511. The outer ring assembly 422 is disposed on the valve seat assembly 10, thereby fastening the inner ring assembly 421 to the conversion member 50 and implementing cooperation between the conversion member 50 and the cooperation bearing 42. When the conversion member 50 rotates, the inner ring assembly 421 rotates with the conversion member 50, and the outer ring assembly 422 is positioned and mounted in the valve seat assembly 10. Therefore, the cooperation bearing 42 can support the conversion member 50, so that the conversion member 50 can stably rotate in the valve seat assembly 10.

Specifically, when the conversion member 50 rotates, the conversion member 50 drives the valve needle assembly 20 to reciprocate. Because the outer ring assembly 422 of the cooperation bearing 42 is disposed on the valve seat assembly 10 and the inner ring assembly 421 rotates with the conversion member 50, the cooperation bearing 42 can also limit the position of the conversion member 50 while supporting the conversion member 50. This allows the conversion member 50 to smoothly rotate without reciprocating with the valve needle assembly 20, thereby allowing the conversion member 50 to smoothly drive the valve needle assembly 20 to reciprocate, so that the valve needle assembly 20 can smoothly open or close the valve port 121.

In some optional embodiments of this application, as shown in FIG. 17, an outer peripheral wall of the conversion member 50 is provided with an annular recess 512. An inner wall of the annular recess 512 that is disposed opposite to the second stop portion 511 defines the third stop portion 515. The inner ring assembly 421 is sleeved on the annular recess 512, one end of the inner ring assembly 421 supports the second stop portion 511, and the other end of the inner ring assembly 421 abuts against the third stop portion 515, thereby achieving fastening and cooperation between the inner ring assembly 421 and the conversion member 50. This allows the cooperation bearing 42 to support the conversion member 50, so that the conversion member 50 can rotate smoothly and stably.

In some specific embodiments of this application, as shown in FIG. 17, the conversion member 50 includes a first metal member 51. A portion of the first metal member 51 is bent outward to define the second stop portion 511. In this way, the cooperation bearing 42 can be conveniently mounted to the conversion member 50. Specifically, after the cooperation bearing 42 is sleeved on the conversion member 50 from an end portion of the first metal member 51, the end portion of the first metal member 51 is bent outward so that the second stop portion 511 is in contact with and cooperates with the side of the cooperation bearing 42 that faces the valve port 121.

A portion of the first metal member 51 is bent outward to define the second stop portion 511. In this way, the cooperation bearing 42 can be conveniently mounted to the conversion member 50. Specifically, after the cooperation bearing 42 is sleeved in the annular recess 512 from an end portion of the conversion member 50, a portion of the first metal member 51 is bent so that the second stop portion 511 is in contact with and cooperates with the inner ring assembly 421. In this way, cooperation and connection between the cooperation bearing 42 and the conversion member 50 can be achieved, and the second stop portion 511 is prevented from interfering with mounting of the cooperation bearing 42.

As shown in FIG. 17, in this embodiment, the second stop portion 511 forms a lower side wall of the annular recess 512, and an upper side wall of the annular recess 512 forms the third stop portion 515. The third stop portion 515 is arranged opposite to the second stop portion 511. When the cooperation bearing 42 is sleeved in the annular recess 512 from the end portion of the conversion member 50, an upper end of the inner ring assembly 421 abuts against and cooperates with the third stop portion 515. Then, a portion of the conversion member 50 is bent so that the second stop portion 511 is in contact with and cooperates with the inner ring assembly 421, thereby achieving fastening and cooperation between the inner ring assembly 421 and the conversion member 50. Because the outer ring assembly 422 is positioned and mounted in the valve seat assembly 10, when the conversion member 50 rotates, the conversion member 50 drives the inner ring assembly 421 to rotate. The outer ring assembly 422 supports the conversion member 50 through the inner ring assembly 421, thereby allowing the conversion member 50 to smoothly and stably rotate in the valve seat assembly 10.

The cooperation bearing 42 is sleeved on the conversion member 50 from a lower end of the conversion member 50. After the upper end of the inner ring assembly 421 of the cooperation bearing 42 abuts against and cooperates with the third stop portion 515, a lower end of the first metal member 51 is bent so that the third stop portion 515 abuts against and cooperates with a lower end of the inner ring assembly 421 of the conversion member 50, thereby mounting the cooperation bearing 42 to the conversion member 50. When the conversion member 50 rotates, the conversion member 50 drives the inner ring assembly 421 of the cooperation bearing 42 to rotate.

In some examples, as shown in FIG. 5 and FIG. 19, the valve body 11 defines the accommodation groove 125. The guide seat 30 and the cooperation bearing 42 are disposed in the accommodation groove 125. The cooperation bearing 42 is located on a side of the guide seat 30 that faces away from the valve port 121. The cooperation bearing 42 is sleeved on the conversion member 50. When the cooperation bearing 42 is disposed in the accommodation groove 125, and when a lower end of the outer ring assembly 422 of the cooperation bearing 42 abuts against and cooperates with an upper end of the guide sleeve 41, a portion of the valve body 11 is bent so that the first stop member 111 abuts against and cooperates with the upper end of the outer ring assembly 422 of the cooperation bearing 42. In this case, the guide seat 30 and the first stop member 111 limit the position of the cooperation bearing 42 in the up-down direction, thereby preventing the cooperation bearing 42 from moving in the up-down direction, and further allowing the cooperation bearing 42 to stably support rotation of the conversion member 50.

When the lower end of the outer ring assembly 422 of the cooperation bearing 42 abuts against and cooperates with an upper end of the guide seat 30, the outer ring assembly 422 of the cooperation bearing 42 has a downward compressive force on the guide seat 30, so that the lower end of the guide seat 30 cooperates with a bottom wall of the accommodation groove 125. Further, the position of the guide seat 30 in the accommodation groove 125 is limited, thereby fastening the guide seat 30 in the accommodation groove 125, preventing the guide seat 30 from rotating in the accommodation groove 125, and allowing the guide seat 30 to limit rotation of the guide sleeve 41.

In some optional embodiments of this application, as shown in FIG. 4 and FIG. 17, the electronic expansion valve 1 further includes a rotor component 60. The conversion member 50 includes a first portion 501 and a second portion 502 that are fixedly connected. The first portion 501 cooperates with the valve needle assembly 20 to convert rotation of the conversion member 50 into reciprocating movement of the valve needle assembly 20. The second portion 502 cooperates with the rotor component 60 to be driven to rotate by the rotor component 60. In this way, the first portion 501 and the second portion 502 can be formed as different materials according to requirements, thereby allowing the first portion 501 to smoothly cooperate with the valve needle assembly 20 and allowing the second portion 502 to smoothly cooperate with the rotor component 60.

In some optional embodiments of this application, the first portion 501 is formed as a resin component, and the first portion 501 is in threaded fit with the valve needle assembly 20, which is conducive to reducing a weight of the conversion member 50. In addition, the resin component can lubricate an internal thread and an external thread to ensure that the first portion 501 can smoothly drive the valve needle assembly 20 to reciprocate.

In some optional embodiments of this application, the second portion 502 is formed as a metal member, and the second portion 502 is welded to the rotor component 60, thereby fixedly connecting the rotor component 60 and the conversion member 50 together. This allows the rotor component 60 to smoothly drive the conversion member 50 to rotate when the rotor component 60 rotates, thereby allowing the conversion member 50 to drive the valve needle assembly 20 to reciprocate.

In some embodiments, as shown in FIG. 2, the electronic expansion valve 1 further includes a coil assembly 19. The coil assembly 19 is coupled to the rotor component 60. After the coil assembly 19 is energized, the coil assembly 19 can drive the rotor component 60 to rotate. The rotor component 60 drives the conversion member 50 to rotate through the second portion 502. When the conversion member 50 rotates, the conversion member 50 can drive the valve needle assembly 20 to reciprocate, thereby allowing the valve needle assembly 20 to open or close the valve port 121.

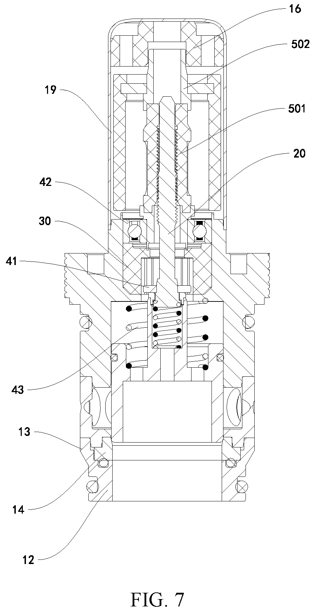

In some optional embodiments of this application, as shown in FIG. 7, a cooperation member 16 is disposed in the valve seat assembly 10. The electronic expansion valve 1 further includes a rotation assembly. The rotation assembly cooperates with the valve needle assembly 20 to convert rotation of the rotation assembly into reciprocating movement of the valve needle assembly 20. The rotation assembly cooperates with the cooperation member 16 to radially limit the rotation assembly, thereby being conducive to reducing wobbling of the rotation assembly in a radial direction. Specifically, the cooperation member 16 can support the rotation assembly, which is conducive to reducing an amplitude of wobbling of the rotation assembly in the radial direction of the rotation assembly, thereby allowing the rotation assembly to smoothly rotate and allowing the rotation assembly to smoothly drive the valve needle assembly 20 to reciprocate.

Specifically, because the rotation assembly has a certain length, when the rotation assembly rotates, the rotation assembly is likely to wobble in the radial direction of the rotation assembly. By enabling the rotation assembly to cooperate with the cooperation member 16, the cooperation member 16 can be used to support rotation of the rotation assembly, thereby reducing the amplitude of wobbling of the rotation assembly when the rotation assembly rotates, improving rotation stability of the rotation assembly and reducing the possibility of the rotation assembly colliding with the valve seat assembly 10.

In some optional embodiments of this application, the rotation assembly is inserted into and is in rotational engagement with the cooperation member 16. In this way, when the rotation assembly rotates, on the one hand, the cooperation member 16 can support the rotation assembly, thereby allowing the rotation assembly to stably rotate. On the other hand, the cooperation member 16 does not interfere with rotation of the rotation assembly, thereby allowing the rotation assembly to smoothly drive the valve needle assembly 20 to reciprocate.

In some embodiments, the rotation assembly includes the conversion member 50 and the rotor assembly 60. The rotor assembly 60 cooperates with the conversion member 50 to drive the conversion member 50 to rotate. The conversion member 50 cooperates with the valve needle assembly 20 to convert rotation of the conversion member 50 into reciprocating movement of the valve needle assembly 20, thereby allowing the valve needle assembly 20 to reciprocate in the valve seat assembly to open or close the valve port 121.

In some embodiments, the rotor assembly 60 cooperates with and is in rotational engagement with the cooperation member 16. The cooperation member 16 can radially limit the rotor assembly 60, thereby reducing an amplitude of wobbling of the rotor assembly 60 in a radial direction of the rotor assembly 60 when the rotor assembly 60 rotates, ensuring stable rotation of the rotor assembly 60 and reducing the possibility of the rotor assembly 60 colliding with the valve seat assembly 10.

In some other embodiments, the conversion member 50 cooperates with and is in rotational engagement with the cooperation member 16. In some other embodiments, both the conversion member 50 and the rotor assembly 60 cooperate with and are in rotational engagement with the cooperation member 16.

In some embodiments, as shown in FIG. 2, the valve seat assembly 10 includes the valve body 11 and a sleeve 17. The sleeve 17 is fastened to the valve body 11. The sleeve 17 and the valve body 11 together define a mounting cavity. The rotor assembly is rotatably disposed in the mounting cavity. The cooperation member 16 is disposed in the sleeve 17 and is in rotational engagement with the rotor assembly.

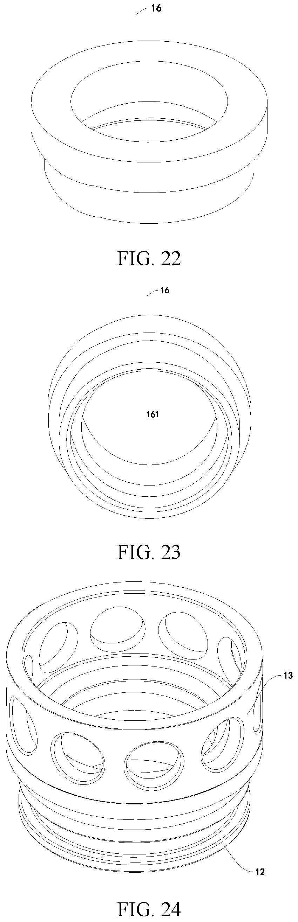

As shown in FIG. 7 and FIG. 23, in some embodiments, the conversion member 50 cooperates with and is in rotational engagement with the cooperation member 16. The cooperation member 16 defines a cooperation cavity 161. An end portion of the second portion 502 of the conversion member 50 extends into the cooperation cavity 161. When the conversion member 50 rotates, a side wall of the cooperation cavity 161 limits rotation of the second portion 502, thereby reducing an amplitude of wobbling of the end portion of the conversion member 50 when the conversion member 50 rotates.

Specifically, if the conversion member 50 is relatively long, the amplitude of wobbling of the end portion of the conversion member 50 is relatively large when the conversion member 50 rotates. By enabling the end portion of the second portion 502 to be inserted into and in rotational engagement with the cooperation member 16, a rotation direction of the second portion 502 can be guided, thereby reducing the amplitude of wobbling of the end portion of the conversion member 50 and improving rotation stability of the conversion member 50.

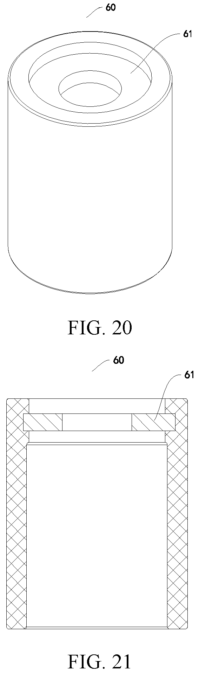

As shown in FIG. 21, in this embodiment, the rotor component 60 includes a connection portion 61. The connection portion 61 is configured to be welded to the second portion 502, thereby fixedly connecting the rotor component 60 and the conversion member 50 together. This allows the rotor component 60 to smoothly drive the conversion member 50 to rotate when the rotor component 60 rotates, thereby allowing the conversion member 50 to drive the valve needle assembly 20 to reciprocate.

The cooperation member 16 can limit the conversion member 50, thereby reducing the amplitude of wobbling of the conversion member 50 and consequently reducing the amplitude of wobbling of the rotor component 60, to lower the possibility of the rotor component 60 colliding with the valve seat assembly 10 when the rotor component 60 rotates.

In some embodiments of this application, as shown in FIG. 2, the electronic expansion valve 1 further includes a first elastic member 43. The first elastic member 43 cooperates with the valve needle assembly 20 and the valve seat assembly 10 to apply an elastic force to the valve needle assembly 20 to cause the valve needle assembly 20 to move toward the valve port 121. In this way, an abutting force between the valve needle assembly 20 and the valve seat assembly 10 is increased when the valve needle assembly 20 closes the valve port 121, so that the valve needle assembly 20 can fully close the valve port 121, thereby avoiding liquid leakage caused by existence of a gap between the valve needle assembly 20 and the valve port 121, and improving qualification rates of the electronic expansion valve 1.

In some optional embodiments of this application, the first elastic member 43 is located on a side of the guide seat 30 that faces the valve port 121, so that the first elastic member 43 can apply an elastic force to the valve needle assembly 20 to cause the valve needle assembly 20 to move toward the valve port 121. In this way, the valve needle assembly 20 can fully close the valve port 121, thereby avoiding liquid leakage caused by existence of a gap between the valve needle assembly 20 and the valve port 121, and improving qualification rates of the electronic expansion valve 1.

As shown in FIG. 5 and FIG. 19, in this embodiment, the valve seat assembly 10 defines a valve cavity 116. The valve cavity 116 is located on a side of the guide sleeve 41 that faces the valve port 121. The first elastic member 43 is disposed in the valve cavity 116. One end of the first elastic member 43 abuts against a top wall of the valve cavity 116, and the other end abuts against the valve needle assembly 20. When the valve needle assembly 20 closes the valve port 121, the first elastic member 43 is in a compressed state, and the first elastic member 43 has an elastic force on the valve needle assembly 20 toward the valve port 121, so that the valve needle assembly 20 can fully close the valve port 121, which is conducive to reducing the possibility of liquid leakage of the electronic expansion valve 1 and improving qualification rates of the electronic expansion valve 1.

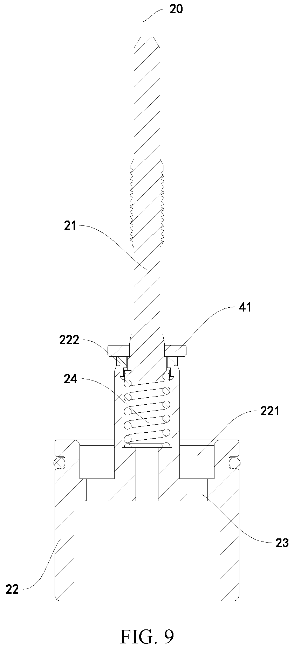

In some optional embodiments of this application, as shown in FIG. 5 and FIG. 9, the valve needle assembly 20 is provided with a cooperation groove 221. One end of the first elastic member 43 extends into the cooperation groove 221. The cooperation groove 221 limits radial displacement of the first elastic member 43, thereby allowing the first elastic member 43 to apply an elastic force to the valve needle assembly 20 toward the valve port 121, so that the valve needle assembly 20 can fully close the valve port 121.

In some embodiments, as shown in FIG. 5, the first elastic member 43 is sleeved on the valve needle assembly 20. One end of the first elastic member 43 extends into the cooperation groove 221, and the other end of the first elastic member 43 abuts against the valve needle assembly 20. By enabling one end of the first elastic member 43 to extend into the cooperation groove 221, and enabling the first elastic member 43 to abut against a side wall and a bottom wall of the cooperation groove 221, the cooperation groove 221 is used to limit a deformation direction of the first elastic member 43 to allow the first elastic member 43 to deform smoothly in an up-down direction. This allows the first elastic member 43 to apply a downward force to the valve needle assembly 20, so that the valve needle assembly 20 can open or close the valve port 121.

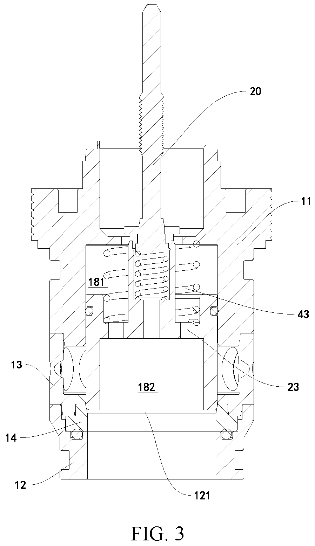

In some optional embodiments of this application, as shown in FIG. 3 and FIG. 19, the valve seat assembly 10 defines the valve cavity 116. The valve cavity 116 is located on the side of the guide sleeve 41 that faces the valve port 121. The valve cavity 116 communicates with the valve port 121. A portion of the valve needle assembly 20 can reciprocate in the valve cavity 116. The valve needle assembly 20 divides the valve cavity 116 into a first chamber 181 and a second chamber 182. The second chamber 182 communicates with the valve port 121. The valve needle assembly 20 is provided with a balance hole 23. The balance hole 23 connects the first chamber 181 and the second chamber 182 to balance air pressure in the first chamber 181 and the second chamber 182, thereby allowing the valve needle assembly 20 to smoothly reciprocate in the valve cavity 116 and allowing the valve needle assembly 20 to smoothly open or close the valve port 121.

When a refrigerant flows into the second chamber 182, the refrigerant can flow through the balance hole 23 into the first chamber 181 to lubricate the first elastic member 43 in the valve cavity 116 and lubricate the valve needle assembly 20, thereby allowing the valve needle assembly 20 to smoothly reciprocate.

Liquid in the first chamber 181 can enter the accommodation groove 125 through a gap between the valve needle assembly 20 and the valve seat assembly 10, thereby lubricating the guide seat 30 and the cooperation bearing 42 in the accommodation groove 125, to achieve lubrication of components inside the valve needle assembly 20.

In some embodiments of this application, as shown in FIG. 2, the valve seat assembly 10 includes the valve body 11, a valve seat 12, and a flow channel seat 13. The valve seat 12 is provided with the valve port 121. The flow channel seat 13 is fastened between the valve seat 12 and the valve body 11. The flow channel seat 13 is provided with at least one inlet 131. The valve port 121 is located in the movement direction of the valve needle assembly 20. The inlet 131 is located in a direction perpendicular to the movement direction of the valve needle assembly 20. The inlet 131 is located on a side wall of the flow channel seat 13. Liquid can enter the valve seat assembly 10 from the side wall of the flow channel seat 13 through the inlet 131 and flow out of the valve seat assembly 10 from the valve port 121.

In some embodiments, a peripheral wall of the flow channel seat 13 is provided with a plurality of inlets 131. The plurality of inlets 131 are spaced apart in a circumferential direction of the flow channel seat 13, thereby allowing external liquid to enter a fluid space 101 uniformly through the plurality of inlets 131.

In some embodiments of this application, as shown in FIG. 5, FIG. 26, and FIG. 27, the valve seat assembly 10 includes the valve seat 12, the flow channel seat 13, and a valve sleeve 14. The flow channel seat 13 is provided with at least one inlet 131. The valve sleeve 14 is fastened between the valve seat 12 and the flow channel seat 13. The valve sleeve 14 can seal a gap between the valve seat 12 and the flow channel seat 13 to prevent liquid in the valve seat assembly 10 from flowing out through the gap between the valve seat 12 and the flow channel seat 13, thereby ensuring sealing performance of the electronic expansion valve 1 and reducing the possibility of internal leakage of the electronic expansion valve 1.

The valve sleeve 14 is provided with the valve port 121. The valve sleeve 14 is in interference fit with the flow channel seat 13 in the radial direction to limit the position of the valve sleeve 14 in the flow channel seat 13 in the radial direction, thereby preventing the valve sleeve 14 from moving in the radial direction of the valve sleeve 14. This helps ensure coaxiality between the flow channel seat 13 and the valve sleeve 14, and ensure coaxiality between the valve sleeve 14 and the valve seat 12, thereby preventing the valve sleeve 14 from moving in the radial direction of the valve sleeve 14 relative to the flow channel seat 13 or the valve seat 12. This allows the valve sleeve 14 to fully seal the gap between the flow channel seat 13 and the valve seat 12, thereby improving sealing performance of the electronic expansion valve 1.

In some optional embodiments of this application, the flow channel seat 13 is provided with a cooperation protrusion portion 132. A portion of an outer peripheral wall of the valve sleeve 14 is in interference fit with the cooperation protrusion portion 132 to allow the valve sleeve 14 to be tightly attached to the cooperation protrusion portion 132. In this way, the valve sleeve 14 can fully seal the gap between the valve seat 12 and the flow channel seat 13 to prevent liquid from flowing out through the gap between the valve seat 12 and the flow channel seat 13, thereby ensuring sealing performance of the electronic expansion valve 1 and reducing the possibility of internal leakage of the electronic expansion valve 1.

In addition, enabling a portion of the outer peripheral wall of the valve sleeve 14 to be in interference fit with the cooperation protrusion portion 132 causes the cooperation protrusion portion 132 to compress the outer peripheral wall of the valve sleeve 14, thereby preventing the valve sleeve 14 from moving in the radial direction of the valve sleeve 14. This helps ensure coaxiality between the flow channel seat 13 and the valve sleeve 14, and ensure coaxiality between the valve sleeve 14 and the valve seat 12, thereby preventing the valve sleeve 14 from moving in the radial direction of the valve sleeve 14 relative to the flow channel seat 13 or the valve seat 12. This allows the valve sleeve 14 to fully seal the gap between the flow channel seat 13 and the valve seat 12, thereby improving sealing performance of the electronic expansion valve 1.

In some embodiments, an inner wall of the valve sleeve 14 cooperates with an inner wall of the valve seat 12 and an inner wall of the flow channel seat 13 to define the fluid space 101. The fluid space 101 communicates with the valve port 121 and the inlet 131. Liquid can flow into the fluid space 101 from the inlet 131 on a peripheral wall of the flow channel seat 13 and flow out of the fluid space 101 from the valve port 121. At least a portion of the valve needle assembly 20 is disposed in the fluid space 101 in a reciprocating manner. When the valve needle assembly 20 reciprocates, the valve needle assembly 20 can open or close the valve port 121. When the valve needle assembly 20 abuts against and cooperates with the valve sleeve 14, the valve needle assembly 20 closes the valve port 121.

By enabling a portion of the outer peripheral wall of the valve sleeve 14 to be in interference fit with the cooperation protrusion portion 132, the cooperation protrusion portion 132 can compress the outer peripheral wall of the valve sleeve 14, thereby preventing the valve sleeve 14 from moving in the radial direction of the valve sleeve 14. This ensures coaxiality between the flow channel seat 13 and the valve sleeve 14, and ensures coaxiality between the valve sleeve 14 and the valve needle assembly 20. In this way, when the valve needle assembly 20 moves to close the valve port 121, the valve needle assembly 20 can fully abut against and cooperate with the valve sleeve 14, thereby avoiding existence of a gap between the valve needle assembly 20 and the valve sleeve 14. This helps improve sealing performance when the electronic expansion valve 1 closes the valve port 121 and reduce the possibility of internal leakage of the electronic expansion valve 1.

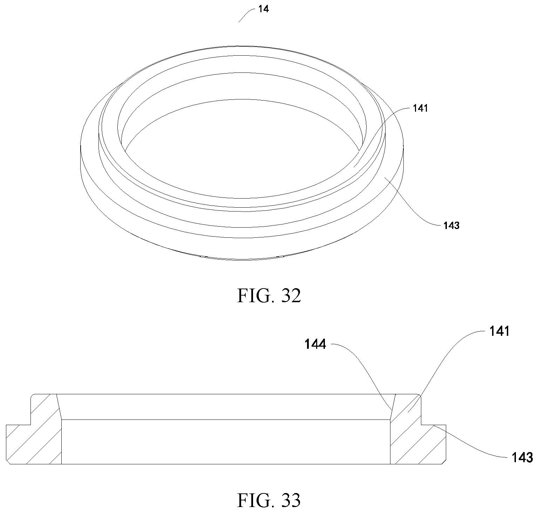

In some embodiments, as shown in FIG. 33, an inner side of the valve sleeve 14 has a cooperation inclined surface 144. When the valve needle assembly 20 moves to close the valve port 121, the valve needle assembly 20 abuts against and cooperates with the cooperation inclined surface 144. This helps increase an abutting force between the valve needle assembly 20 and the valve sleeve 14, so that the valve needle assembly 20 can fully abut against the valve sleeve 14, and the valve needle assembly 20 can fully close the valve port 121.

In some embodiments, the valve sleeve 14 is a non-metal member. In this way, wear of the valve sleeve 14 on the flow channel seat 13 or the valve seat 12 can be reduced when the valve sleeve 14 is mounted on the flow channel seat 13 or the valve seat 12, thereby ensuring the valve sleeve 14 seals the gap between the flow channel seat 13 and the valve seat 12.

In some examples, the valve sleeve 14 is made of rubber, synthetic resin, plant fiber, or animal leather, so that the valve sleeve 14 can fully seal the gap between the flow channel seat 13 and the valve seat 12, thereby improving sealing performance of the electronic expansion valve 1 and reducing the possibility of internal leakage of the electronic expansion valve 1.

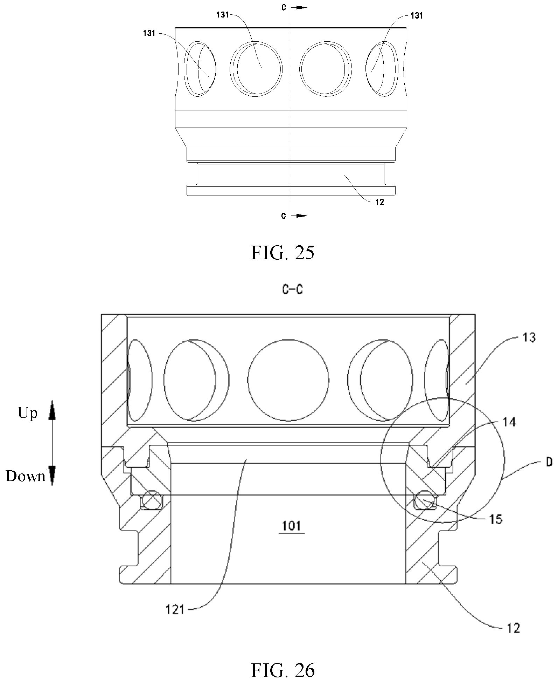

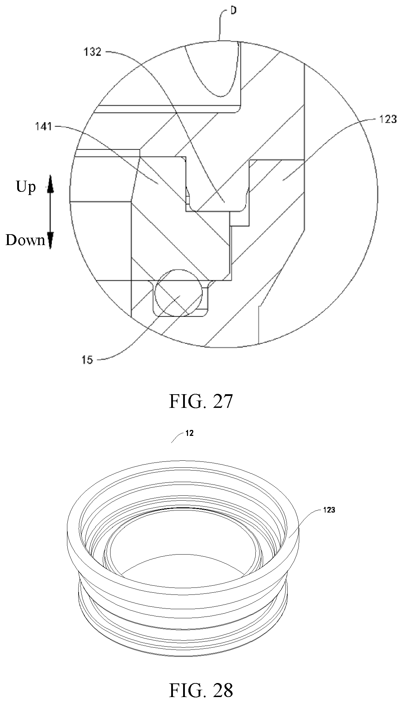

In some specific embodiments of this application, as shown in FIG. 26 and FIG. 27, the cooperation protrusion portion 132 is clamped between the valve sleeve 14 and the valve seat 12. The valve seat 12 can limit the position of the cooperation protrusion portion 132 in a radial direction of the valve seat 12, thereby preventing the flow channel seat 13 and the valve sleeve 14 from generating displacement together in the radial direction of the valve seat 12. This helps ensure coaxiality between the valve seat 12, the valve sleeve 14, and the flow channel seat 13, so that the valve sleeve 14 can fully seal the gap between the valve seat 12 and the flow channel seat 13, thereby reducing the possibility of internal leakage of the electronic expansion valve 1.

As shown in FIG. 27, in this embodiment, the valve sleeve 14 has a first protrusion portion 141. The first protrusion portion 141 extends upward in an up-down direction. The valve seat 12 has a second protrusion portion 123. The second protrusion portion 123 extends upward in a front-back direction. The cooperation protrusion portion 132 extends downward in the up-down direction. The cooperation protrusion portion 132 is clamped between the first protrusion portion 141 and the second protrusion portion 123. The first protrusion portion 141 is located on an inner side of the cooperation protrusion portion 132. The cooperation protrusion portion 132 is in interference fit with an outer peripheral wall of the first protrusion portion 141. The second protrusion portion 123 is located on an outer side of the cooperation protrusion portion 132.

It will be noted herein that the foregoing "inner side" and "outer side" are relative to a centerline of the cooperation protrusion portion 132. A direction close to the centerline of the cooperation protrusion portion 132 is the inner side, and a direction away from the centerline of the cooperation protrusion portion 132 is the outer side.

The cooperation protrusion portion 132 is in interference fit with the outer peripheral wall of the first protrusion portion 141, and the cooperation protrusion portion 132 has an inward compressive force on the outer peripheral wall of the first protrusion portion 141 in the radial direction of the cooperation protrusion portion 132, thereby limiting the position of the first protrusion portion 141 in the radial direction of the cooperation protrusion portion 132 to prevent the valve sleeve 14 from moving relative to the flow channel seat 13 in the radial direction of the cooperation protrusion portion 132.

The second protrusion portion 123 is located on the outer side of the cooperation protrusion portion 132, and the second protrusion portion 123 has an inward compressive force on the outer peripheral wall of the cooperation protrusion portion 132 in the radial direction of the second protrusion portion 123, thereby limiting the position of the cooperation protrusion portion 132 in the radial direction of the second protrusion portion 123 to prevent the flow channel seat 13 and the valve sleeve 14 from moving in the radial direction of the valve seat 12 relative to the valve seat 12. This ensures coaxiality between the valve seat 12, the valve sleeve 14, and the flow channel seat 13, so that the valve sleeve 14 can fully seal the gap between the valve seat 12 and the flow channel seat 13, thereby reducing the possibility of internal leakage of the electronic expansion valve 1.

In some embodiments, surfaces that are of the valve seat 12 and the valve sleeve 14 and that face each other fit in a sealed manner to ensure sealing performance between the valve sleeve 14 and the valve seat 12, thereby reducing the possibility of internal leakage of the electronic expansion valve 1.

As shown in FIG. 26, FIG. 27, and FIG. 29, in this embodiment, the flow channel seat 13 is disposed above the valve sleeve 14. The valve sleeve 14 is disposed above the valve seat 12. The valve seat 12 defines a first cavity portion 124. A lower portion of the valve sleeve 14 is located in the first cavity portion 124. A lower wall surface of the valve sleeve 14 fits with the bottom wall of the first cavity portion 124 in a sealed manner to ensure sealing performance between the valve sleeve 14 and the valve seat 12, thereby reducing the possibility of internal leakage of the electronic expansion valve 1.

In some examples, an outer side wall of the lower portion of the valve sleeve 14 fits with a side wall of the first cavity portion 124 in a sealed manner to further seal the gap between the valve sleeve 14 and the valve seat 12, thereby ensuring sealing performance between the valve sleeve 14 and the valve seat 12, and reducing the possibility of internal leakage of the electronic expansion valve 1.

In some embodiments, as shown in FIG. 26, FIG. 27, and FIG. 31, surfaces that are of the valve sleeve 14 and the flow channel seat 13 and that face each other fit in a sealed manner. The cooperation protrusion portion 132 defines a second cavity portion 133. An upper portion of the valve sleeve 14 is located in the second cavity portion 133. An upper wall surface of the valve sleeve 14 fits with a top wall of the second cavity portion 133 in a sealed manner. An outer side wall of the upper portion of the valve sleeve 14 fits with an inner side wall of the cooperation protrusion portion 132 in a sealed manner to ensure sealing performance between the flow channel seat 13 and the valve sleeve 14, and prevent liquid from flowing out through the gap between the flow channel seat 13 and the valve sleeve 14, thereby reducing the possibility of internal leakage of the electronic expansion valve 1.

In some specific embodiments of this application, as shown in FIG. 27, a sealing ring 15 is further disposed between the valve sleeve 14 and the valve seat 12 to further ensure the degree of sealing between the valve seat 12 and the valve sleeve 14, and prevent liquid from flowing out through the gap between the valve seat 12 and the valve sleeve 14, thereby reducing the possibility of internal leakage of the electronic expansion valve 1.

In some embodiments, as shown in FIG. 27, the cooperation protrusion portion 132 abuts against the valve sleeve 14, so that the sealing ring 15 is fastened between the valve seat 12 and the valve sleeve 14 in a compressed manner. This allows the sealing ring 15 to fully seal the gap between the valve sleeve 14 and the valve seat 12, thereby preventing liquid from flowing out through the gap between the valve seat 12 and the valve sleeve 14.

As shown in FIG. 27 and FIG. 32, in this embodiment, the outer peripheral wall of the valve sleeve 14 is provided with a step portion 143. The cooperation protrusion portion 132 abuts against the step portion 143 to have an abutting force on the valve sleeve 14 toward the valve seat 12. On the one hand, it is ensured that the valve sleeve 14 fits with the valve seat 12 in a sealed manner. On the other hand, the valve sleeve 14 is enabled to have an abutting force on the sealing ring 15 toward the valve seat 12, thereby allowing the sealing ring 15 to be fastened between the valve seat 12 and the valve sleeve 14 in a compressed manner, so that the sealing ring 15 can fully seal the gap between the valve seat 12 and the valve sleeve 14.

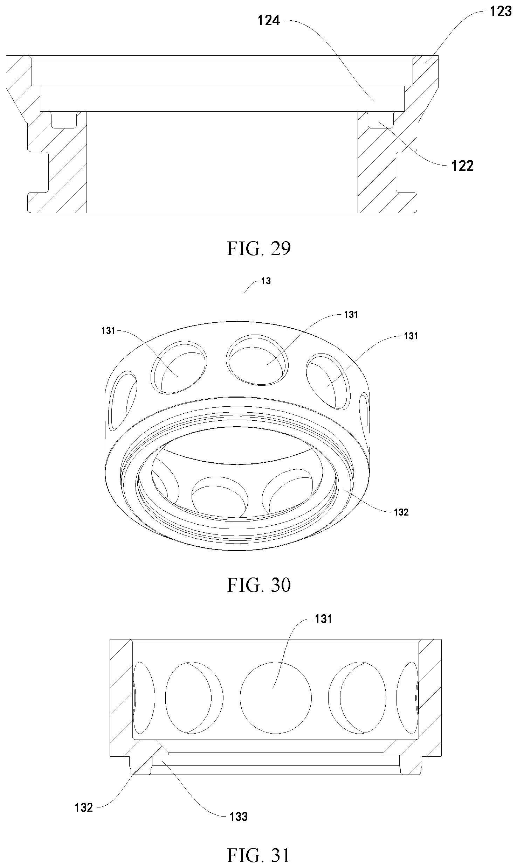

In some embodiments, as shown in FIG. 27 and FIG. 29, the valve seat 12 is provided with a recess 122. The sealing ring 15 is disposed in the recess 122 to increase a contact area between the sealing ring 15 and the valve seat 12, so that the sealing ring 15 can fully seal the gap between the valve seat 12 and the valve sleeve 14.

By disposing the recess 122 and disposing the sealing ring 15 in the recess 122, sealing performance between the valve sleeve 14 and the valve seat 12 is improved. Specifically, the surfaces that are of the valve seat 12 and the valve sleeve 14 and that face each other are planes, so that a gap that may be formed between the valve seat 12 and the valve sleeve 14 is a straight gap, and liquid is likely to flow out through the straight gap. By disposing the recess 122 and disposing the sealing ring 15 in the recess 122, the straight gap between the valve seat 12 and the valve sleeve 14 is changed into a bent gap. In this way, the degree of sealing between the valve seat 12 and the valve sleeve 14 can be improved, making it difficult for liquid to flow out through the bent gap, thereby reducing the possibility of internal leakage of the electronic expansion valve 1.

As shown in FIG. 29, in this embodiment, the valve seat 12 defines the first cavity portion 124. The lower portion of the valve sleeve 14 is located in the first cavity portion 124. A portion of the bottom wall of the first cavity portion 124 is recessed downward to form the recess 122. Because the cooperation protrusion portion 132 abuts against the valve sleeve 14, the cooperation protrusion portion 132 has a downward compressive force on the valve sleeve 14, so that the lower wall surface of the valve sleeve 14 fits with the bottom wall of the first cavity portion 124 in a sealed manner. This also causes the lower wall surface of the valve sleeve 14 to have a downward compressive force on the sealing ring 15 to compress the sealing ring 15 and fasten the sealing ring 15 in the recess 122 in a compressed manner.

When the recess 122 and the sealing ring 15 are not disposed, a gap that extends in a horizontal direction may be formed between the lower wall surface of the valve sleeve 14 and the bottom wall of the first cavity portion 124. By disposing the recess 122 and disposing the sealing ring 15 in the recess 122 in a compressed manner, the sealing ring 15 can fully seal the valve sleeve 14 and the bottom wall of the first cavity portion 124 in the up-down direction. In this way, the gap between the valve sleeve 14 and the valve seat 12 has a bent portion, making it difficult for liquid to flow out through the gap between the valve sleeve 14 and the valve seat 12, thereby reducing the possibility of internal leakage of the electronic expansion valve 1.

In some embodiments of this application, the valve needle assembly 20 includes the valve stem 21, the valve needle 22, and a second elastic member 24. The valve needle 22 cooperates with the valve stem 21 to be driven by the valve stem 21 to reciprocate. The second elastic member 24 is connected to the valve stem 21 and the valve needle 22 to apply a force to the valve needle 22 to cause the valve needle 22 to move toward the valve port 121. In this way, the acting force between the valve needle 22 and the valve port 121 is increased when the valve needle 22 closes the valve port 121, so that the valve needle 22 can fully close the valve port 121, thereby reducing the possibility of liquid leakage when the electronic expansion valve 1 closes the valve port 121, and improving a qualification rate of the electronic expansion valve 1.

In some optional embodiments of this application, the valve stem 21 is provided with a first stop surface 215 and a second stop surface 216. The first stop surface 215 and the second stop surface 216 are spaced apart in a movement direction of the valve stem 21. The valve needle 22 is provided with a second stop member 222. At least a portion of the second stop member 222 is located between the first stop surface 215 and the second stop surface 216. The valve needle 22 is movable relative to the valve stem 21 to switch the second stop member 222 between abutting against the first stop surface 215 and the second stop surface 216. The first stop surface 215 and the second stop surface 216 are used to control a range of movement of the valve needle 22 relative to the valve stem 21. Because the second elastic member 24 is connected to both the valve stem 21 and the valve needle 22, by controlling the range of movement of the valve needle 22 relative to the valve stem 21, a compression amount of the second elastic member 24 being compressed can be controlled, and a magnitude of the force of the second elastic member 24 to the valve needle 22 can be further controlled. In this way, the second elastic member 24 can be prevented from failing while ensuring that the valve needle 22 can fully close the valve port 121.

In some specific embodiments of this application, the anti-rotation assembly includes the guide seat 30 and the guide sleeve 41. The guide seat 30 is disposed on the valve seat assembly 10. The guide sleeve 41 is disposed on the valve needle assembly 20. The guide sleeve 41 and the guide seat 30 cooperate in an anti-rotation manner to limit rotation of the portion of the valve needle assembly 20 that at least cooperates with the valve port 121. When the valve needle assembly 20 reciprocates, under limitation of the guide seat 30, the guide sleeve 41 and the portion of the valve needle assembly 20 that cooperates with the valve port 121 can only move in the valve seat assembly 10 without rotating. In this way, friction between the portion of the valve needle assembly 20 that cooperates with the valve port 121 and the valve seat assembly 10 can be reduced when the valve needle assembly 20 opens or closes the valve port 121, thereby reducing noise generated in the electronic expansion valve 1, reducing the degree of mutual wear between the valve needle assembly 20 and the valve seat assembly 10, improving service life of the valve needle assembly 20, and improving service life of the electronic expansion valve 1.

In some embodiments, the guide sleeve 41 is fastened to the valve stem 21, or the guide seat 30 and the valve stem 21 are an integral member. The valve stem 21 is in threaded fit with the conversion member 50. When the conversion member 50 drives the valve stem 21 to reciprocate, the valve stem 21 has a tendency to rotate. Because the guide sleeve 41 cooperates with the guide seat 30, the guide seat 30 has an anti-rotation force on the guide sleeve 41 to limit the rotational degree of freedom of the guide sleeve 41 and the valve stem 21, and further limit the rotational degree of freedom of the valve needle 22. When the valve needle 22 opens or closes the valve port 121, the valve needle 22 can only reciprocate without rotating, thereby reducing wear between the valve needle 22 and the valve seat assembly 10.

In some other embodiments, the guide sleeve 41 is fastened to the valve needle 22, or the guide seat 30 and the valve needle 22 are an integral member. The valve needle 22 is in rotational engagement with the valve stem 21. The valve stem 21 is in threaded fit with the conversion member 50. When the conversion member 50 drives the valve stem 21 to reciprocate, when the valve stem 21 rotates, because the guide sleeve 41 cooperates with the guide seat 30, the guide seat 30 has an anti-rotation force on the guide sleeve 41, and further has an anti-rotation force on the valve needle 22. When the valve needle 22 opens or closes the valve port 121, the valve needle 22 can only reciprocate without rotating, thereby reducing wear between the valve needle 22 and the valve seat assembly 10.

In some specific embodiments of this application, the valve needle 22 is provided with a second stop member 222. The guide sleeve 41 is disposed on a side of the second stop member 222 that faces away from the valve port 121. The guide sleeve 41 is adapted to abut against the second stop member 222 to limit movement displacement of the valve needle 22.

In some embodiments, a side of the guide sleeve 41 that faces the valve needle 22 defines the second stop surface 216. The second stop member 222 includes a first cooperation surface 231 and a second cooperation surface 232. The first cooperation surface 231 and the second cooperation surface 232 are located between the first stop surface 215 and the second stop surface 216. The first cooperation surface 231 is located below the second cooperation surface 232. When the valve needle assembly 20 closes the valve port 121, the second cooperation surface 232 abuts against and cooperates with the second stop surface 216. When the valve needle assembly 20 opens the valve port 121, the first cooperation surface 231 abuts against and cooperates with the first stop surface 215.

When the valve needle assembly 20 closes the valve port 121, and the valve stem 21 and the guide sleeve 41 move downward relative to the valve needle 22, the second stop surface 216 abuts against and cooperates with the second cooperation surface 232. The valve stem 21 can drive the valve needle 22 to move downward to allow the valve needle 22 to block the valve port 121. In addition, the valve stem 21 compresses the second elastic member 24, thereby allowing the second elastic member 24 to apply a force to the valve needle 22 toward the valve port 121, so that the valve needle 22 can fully block the valve port 121.

Specifically, by enabling the second stop surface 216 to abut against and cooperate with the second cooperation surface 232, the compression amount of the second elastic member 24 by the valve stem is controlled, thereby preventing the second elastic member 24 from failing.

When the valve needle assembly 20 closes the valve port 121, and the valve stem 21 and the guide sleeve 41 move upward relative to the valve needle 22, the valve needle 22 moves upward relative to the valve stem 21. The second stop member 222 moves upward, and the second cooperation surface 232 abuts against and cooperates with the second stop surface 216. In this case, the valve stem 21 drives the valve needle 22 to move downward through the second stop surface 216, so that the valve needle 22 can successfully close the valve port 121.

In some embodiments, the second elastic member 24 extends in the up-down direction. When the valve needle 22 blocks the valve port 121, the second elastic member 24 applies a downward force to the valve needle 22, so that the valve needle 22 can fully block the valve port 121, thereby preventing liquid leakage when the electronic expansion valve 1 blocks the valve port 121, and improving a qualification rate of the electronic expansion valve 1.

In some optional embodiments of this application, the electronic expansion valve 1 further includes the first elastic member 43. The valve seat 12 is provided with the valve cavity 116 communicating with the valve port 121. The valve needle assembly 20 reciprocates in the valve cavity 116. The first elastic member 43 abuts between the valve needle assembly 20 and the inner wall of the valve cavity 116 to apply an elastic force to the valve needle assembly 20 toward the valve port 131. In this way, an abutting force between the valve needle assembly 20 and the valve seat 12 can be increased, so that the valve needle assembly 20 can fully close the valve port 121, thereby avoiding liquid leakage caused by existence of a gap between the valve needle assembly 20 and the valve port 121, and improving a qualification rate of the electronic expansion valve 1.

As shown in FIG. 3 and FIG. 9, the valve needle 21 defines the cooperation groove 221. A portion of the first elastic member 43 is located in the cooperation groove 221. An upper end of the first elastic member 43 abuts against the top wall of the valve cavity 116, and a lower end of the first elastic member 43 abuts against the bottom wall of the cooperation groove 221. A portion of the first elastic member 43 is in contact with and cooperates with the side wall of the cooperation groove 221 to use the cooperation groove 221 to limit radial displacement of the first elastic member 43, thereby allowing the first elastic member 43 to apply an elastic force to the valve needle 21 toward the valve port 121, so that the valve needle 21 can fully close the valve port 121.

The following describes a thermal management system 92 according to an embodiment of this application. The thermal management system 92 according to an embodiment of this application includes the electronic expansion valve 1 according to the foregoing embodiments of this application.

The thermal management system 92 according to an embodiment of this application, by using the electronic expansion valve 1 according to the foregoing embodiments of this application, uses the anti-rotation assembly to limit rotation of the valve needle assembly 20, so as to reduce wear between the valve needle assembly 20 and the valve seat assembly 10, and has advantages of improving service life of the valve needle assembly 20 and service life of the valve seat assembly 10, reducing noise generated in the electronic expansion valve 1, and the like.

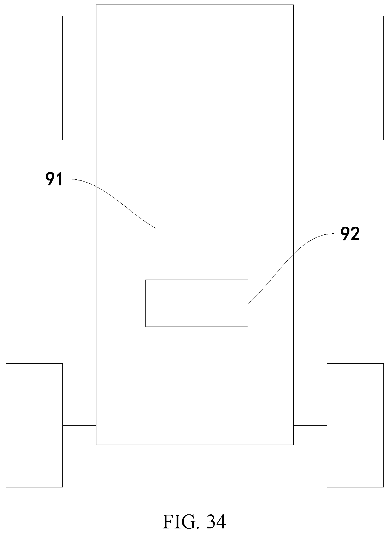

The following describes a vehicle 91 according to an embodiment of this application with reference to FIG. 34. The vehicle 91 according to an embodiment of this application includes the thermal management system 92 according to the foregoing embodiments of this application.

The vehicle 91 according to the embodiment of this application, by using the thermal management system 92 according to the foregoing embodiment of this application, uses the anti-rotation assembly to limit rotation of the valve needle assembly 20, so as to reduce wear between the valve needle assembly 20 and the valve seat assembly 10, and has advantages of improving service life of the valve needle assembly 20 and service life of the valve seat assembly 10, reducing noise generated in the electronic expansion valve 1, and the like.

Other components and operations of the vehicle 91 according to embodiments of this application are known to a person of ordinary skill in the art, and are not described in detail herein.

In descriptions of this specification, reference to descriptions of the terms such as "one embodiment", "some embodiments", "example", "specific example", or "some examples" means that specific features, structures, materials, or characteristics described with reference to the embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner. In addition, a person skilled in the art can integrate or combine different embodiments or examples described in this specification.

Although the embodiments of this application have already been illustrated and described above, it will be understood that the embodiments are examples but will not be understood as a limitation on this application. A person of ordinary skill in the art can make changes, modifications, replacements, or variations to the embodiments within the scope of this application.

## Claims

1. An electronic expansion valve, comprising:
a valve seat assembly, the valve seat assembly being provided with a valve port;
a valve needle assembly, the valve needle assembly being disposed on the valve seat assembly in a reciprocating manner to open or close the valve port; and
an anti-rotation assembly, the anti-rotation assembly being disposed between the valve seat assembly and the valve needle assembly, and the anti-rotation assembly being configured to limit rotation of a portion of the valve needle assembly that at least cooperates with the valve port.

2. The electronic expansion valve according to claim 1, wherein the anti-rotation assembly comprises:
a guide seat, the guide seat being disposed on the valve seat assembly; and
a guide sleeve, the guide sleeve being disposed on the valve needle assembly, the guide sleeve and the guide seat cooperating in an anti-rotation manner to limit rotation of the portion of the valve needle assembly that at least cooperates with the valve port.

3. The electronic expansion valve according to claim 2, wherein the guide sleeve is sleeved on and fastened to the valve needle assembly.

4. The electronic expansion valve according to claim 3, wherein an outer peripheral wall of the valve needle assembly is provided with a first step surface for supporting the guide sleeve.

5. The electronic expansion valve according to claim 4, wherein the outer peripheral wall of the valve needle assembly is provided with a guide inclined surface, and the guide inclined surface extends obliquely toward the first step surface to guide mounting of the guide sleeve.

6. The electronic expansion valve according to claim 5, wherein the guide sleeve is located between the guide inclined surface and the first step surface.

7. The electronic expansion valve according to any one of claims 2 to 6, wherein the guide seat and the valve seat assembly are an integral member; and/or
the guide sleeve and the valve needle assembly are an integral member.

8. The electronic expansion valve according to any one of claims 2 to 7, wherein an outer peripheral wall of a cross-section of the guide sleeve in a radial direction of the valve needle assembly is formed into a non-circular shape, and the outer peripheral wall of the guide sleeve is adapted to cooperate with the guide seat to limit a rotational degree of freedom of the guide sleeve.

9. The electronic expansion valve according to any one of claims 2 to 8, wherein a first stop portion is disposed on a side of a cavity of the guide seat that faces away from the valve port, and the first stop portion cooperates with the guide sleeve to limit movement displacement of the guide sleeve.

10. The electronic expansion valve according to any one of claims 2 to 9, further comprising:
a conversion member, the conversion member cooperating with the valve needle assembly to convert rotation of the conversion member into reciprocating movement of the valve needle assembly; and
a cooperation bearing, the cooperation bearing being disposed between the conversion member and the valve seat assembly.

11. The electronic expansion valve according to claim 10, wherein the valve seat assembly is provided with an accommodation groove, the guide seat is disposed in the accommodation groove, and the guide seat is clamped between a first bottom wall of the accommodation groove and the cooperation bearing.

12. The electronic expansion valve according to claim 11, wherein a first chamfer is disposed between the first bottom wall and a first inner peripheral wall of the accommodation groove, and a second chamfer is disposed between a placement end surface of the guide seat and an outer peripheral wall of the guide seat.

13. The electronic expansion valve according to claim 12, wherein the placement end surface is supported on the first bottom wall, and the second chamfer and the first chamfer are spaced apart.

14. The electronic expansion valve according to any one of claims 11 to 13, wherein the valve seat assembly is provided with a first stop member, and the first stop member is in contact with a side of the cooperation bearing that faces away from the valve port to limit axial displacement of the cooperation bearing.

15. The electronic expansion valve according to claim 14, wherein the valve seat assembly comprises a valve body, the valve body is a metal member, and a portion of the metal member is bent inward to define the first stop member.

16. The electronic expansion valve according to any one of claims 11 to 15, wherein the cooperation bearing is provided with an inner ring assembly and an outer ring assembly that are relatively rotatable, the conversion member is provided with a second stop portion and a third stop portion that are spaced apart in an axial direction, the inner ring assembly is disposed between the second stop portion and the third stop portion, the second stop portion is located on a side of the third stop portion that faces the valve port, and the outer ring assembly is disposed on the valve seat assembly.

17. The electronic expansion valve according to claim 16, wherein an outer peripheral wall of the conversion member is provided with an annular recess, and an end surface of the annular recess that is disposed opposite to the second stop portion defines the third stop portion.

18. The electronic expansion valve according to claim 16 or 17, wherein the conversion member comprises a first metal member, and a portion of the first metal member is bent outward to define the second stop portion.

19. The electronic expansion valve according to any one of claims 10 to 18, further comprising a rotor component, the conversion member comprising a first portion and a second portion that are fixedly connected, and the first portion cooperating with the valve needle assembly to convert rotation of the conversion member into reciprocating movement of the valve needle assembly; and
the second portion cooperating with the rotor component to be driven to rotate by the rotor component.

20. The electronic expansion valve according to claim 19, wherein the second portion is formed as a metal member, and the second portion is welded to the rotor component.

21. The electronic expansion valve according to any one of claims 1 to 20, wherein a cooperation member is disposed in the valve seat assembly, the electronic expansion valve further comprises a rotation assembly, the rotation assembly cooperates with the valve needle assembly to convert rotation of the rotation assembly into reciprocating movement of the valve needle assembly, and the rotation assembly cooperates with the cooperation member to radially limit the rotation assembly.

22. The electronic expansion valve according to claim 21, wherein the rotation assembly is inserted into and is in rotational engagement with the cooperation member.

23. The electronic expansion valve according to any one of claims 1 to 22, further comprising a first elastic member, the first elastic member cooperating with the valve needle assembly and the valve seat assembly to apply an elastic force to the valve needle assembly to cause the valve needle assembly to move toward the valve port.

24. The electronic expansion valve according to claim 23, wherein the valve needle assembly is provided with a cooperation groove, one end of the first elastic member extends into the cooperation groove, and the cooperation groove limits radial displacement of the first elastic member.

25. The electronic expansion valve according to any one of claims 1 to 24, wherein the valve seat assembly comprises:
a valve seat;
a flow channel seat, the flow channel seat being provided with at least one inlet; and
a valve sleeve, the valve sleeve being fastened between the valve seat and the flow channel seat, the valve sleeve being provided with the valve port, and the valve sleeve and the flow channel seat being in interference fit in a radial direction.

26. The electronic expansion valve according to claim 25, wherein the flow channel seat is provided with a cooperation protrusion portion, and a portion of an outer peripheral wall of the valve sleeve is in interference fit with the cooperation protrusion portion in the radial direction.

27. The electronic expansion valve according to claim 25, wherein a sealing ring is further disposed between the valve sleeve and the valve seat.

28. The electronic expansion valve according to any one of claims 1 to 27, wherein the valve needle assembly comprises:
a valve stem;
a valve needle, the valve needle cooperating with the valve stem to be driven by the valve stem to reciprocate; and
a second elastic member, the second elastic member being connected to the valve stem and the valve needle to apply an acting force to the valve needle to cause the valve needle to move toward the valve port when the valve needle assembly closes the valve port.

29. The electronic expansion valve according to claim 28, wherein the valve stem is provided with a first stop surface and a second stop surface, and the first stop surface and the second stop surface are spaced apart in a movement direction of the valve stem; and
the valve needle is provided with a second stop member, at least a portion of the second stop member is located between the first stop surface and the second stop surface, and the valve needle is movable relative to the valve stem to switch the second stop member between abutting against the first stop surface and the second stop surface.

30. The electronic expansion valve according to claim 28 or 29, wherein the anti-rotation assembly comprises a guide seat and a guide sleeve, the guide seat is disposed on the valve seat assembly, the guide sleeve is disposed on the valve needle assembly, the guide sleeve and the guide seat cooperate in an anti-rotation manner to limit rotation of the portion of the valve needle assembly that at least cooperates with the valve port; and
the valve needle is provided with a second stop member, the guide sleeve is disposed on a side of the second stop member that faces away from the valve port, and the guide sleeve is adapted to abut against the second stop member to limit movement displacement of the valve needle.

31. The electronic expansion valve according to any one of claims 25 to 30, further comprising a first elastic member,
the valve seat being provided with a valve cavity communicating with the valve port, the valve needle assembly reciprocating in the valve cavity, and the first elastic member abutting between the valve needle assembly and an inner wall of the valve cavity to apply an elastic force to the valve needle assembly toward the valve port.

32. The electronic expansion valve according to any one of claims 28 to 31, wherein the anti-rotation assembly is disposed between the valve needle and the valve seat assembly.

33. A thermal management system, comprising the electronic expansion valve according to any one of claims 1 to 32.

34. A vehicle, comprising the thermal management system according to claim 33.
